# EUROPEAN PATENT APPLICATION

(11) **EP 4 120 492 A1**
(43) Date of publication of application: **18.01.2023**
(21) Application number: 22188127.9
(22) Date of filing: 16.12.2019
(51) Int. Cl.: H02G 15/013, H02G 3/22, H02G 15/007

(54) **BUSHING MODULE AND DEVICE HAVING LEAD-OUT WIRES**

(30) Priority: 28.12.2018 CN 201811621511; 28.12.2018 CN 201811622799; 28.12.2018 CN 201811622798
(62) Divisional of application: 19903693.0
(71) Applicant: Foshan Welling Washer Motor Manufacturing Co., Ltd., Foshan, Guangdong 528311 (CN); Huai'An Welling Motor Manufacturing Co., Ltd., Huai'an, Jiangsu 223005 (CN)
(72) Inventor: LI, Guoxiong, Foshan, 528311 (CN); HUANG, Chengdong, Foshan, 528311 (CN); LV, Yuchan, Foshan, 528311 (CN); LIU, Xin, Foshan, 528311 (CN)
(74) Representative: RGTH

(57) **Abstract**

The present invention provides a protective wire assembly and a device with lead wire, the protective wire assembly is installed at a wire outlet of the device and comprises: a first wire fixing clamp, a second wire fixing clamp, a waterproof sealing strip, and a waterproof sealing ring. A plurality of first wire fixing grooves are provided on the first wire fixing clamp, the second wire fixing clamp is provided with a second wire fixing groove corresponding to the first wire fixing groove. The first wire fixing groove and the second wire fixing groove cooperating to form a wire accommodating cavity. The waterproof sealing strip is installed between the first wire fixing clamp and the second wire fixing clamp, and intersects with the wire accommodating cavity to form waterproof sealing between the first wire fixing clamp and the second wire fixing clamp. The waterproof sealing ring is sleeved on the outer peripheral surface of the assembly formed by the first wire fixing clamp and the second wire fixing clamp for contacting and sealing with the peripheral wall of the wire outlet. The protective wire assembly provided by the present invention can simultaneously solve the technical problems of the poor waterproof performance of the hard plastic protective wire sheath and the small fastening force of the soft rubber protective wire sheath to the lead wire in the prior art.

## Description

The present application claims priority to and benefits of Chinese Application No. "201811621511.X", "201811622799.2" and "201811622798.8", filed on December 12, 2018, entitled "PROTECTIVE WIRE ASSEMBLY, AND DEVICE WITH LEAD WIRE", "PROTECTIVE WIRE ASSEMBLY, AND DEVICE WITH LEAD WIRE" and "PROTECTIVE WIRE ASSEMBLY, AND DEVICE WITH LEAD WIRE", the entire contents of which are incorporated herein by reference for all purposes. No new matter has been introduced.

### FIELD

The present invention relates to the technical field of protective wire sheath, specifically, to a protective wire assembly and a device with a lead wire comprising the protective wire assembly.

### BACKGROUND

The existing devices with lead wire generally use a protective wire sheath to fix the lead wire at the wire outlet of the housing of the device. The protective wire sheath is generally made of a single hard plastic material, but the protective wire sheath of hard plastic material cannot be closely attached to the housing of the device, and the contact between the lead wire and the protective wire sheath is also difficult to completely seal, and the waterproof effect is poor. If the protective wire sheath is changed to a rubber material that is easy to deform, this type of protective wire sheath only has a lateral protective effect on the lead wire of the device due to the softness of the rubber material. It cannot provide a good tensile protection along the length direction of the lead wire of the device, making the lead wire poor in tensile strength, which easily causes the lead wire of the device to fall off from the wiring part in the device under the influence of external force, which causes the device to fail or burn out, and even cause safety accidents.

### SUMMARY

The present invention aims to solve at least one of the above-mentioned technical problems.

To this end, the purpose of the first aspect of the present invention is to provide a protective wire assembly.

The purpose of the second aspect of the present invention is to provide a device with a lead wire comprising a protective wire assembly of the first aspect.

The purpose of the third aspect of the present invention is to provide a protective wire assembly.

The purpose of the fourth aspect of the present invention is to provide a device with a lead wire comprising a protective wire assembly of the third aspect.

The purpose of the fifth aspect of the present invention is to provide a protective wire assembly.

The purpose of the sixth aspect of the present invention is to provide a device with a lead wire comprising the protective wire assembly of the fifth aspect.

In order to achieve the above-mentioned purposes, the technical solution of the first aspect of the present invention provides a protective wire assembly, used for a device with a lead wire, and installed at a wire outlet of the device, comprising: a first wire fixing clamp provided with a plurality of first wire fixing grooves; a second wire fixing clamp provided with a second wire fixing groove corresponding to the first wire fixing groove, and the first wire fixing groove and the second wire fixing groove cooperating to form a wire accommodating cavity for fixing the lead wire; a waterproof sealing strip provided between the first wire fixing clamp and the second wire fixing clamp, and intersecting with the wire accommodating cavity to form a waterproof sealing between the first wire fixing clamp and the second wire fixing clamp; and a waterproof sealing ring sleeved on an outer peripheral surface of an assembly formed by the first wire fixing clamp and the second wire fixing clamp, and used to contact and seal a peripheral wall of the wire outlet.

According to the protective wire assembly provided by the above-mentioned technical solutions of the present invention, the first wire fixing clamp and the second wire fixing clamp cooperate to form a wire accommodating cavity for fixing the lead wire, which can play a very good role in fixing the lead wire. The assembly formed by the first wire fixing clamp and the second wire fixing clamp can be fastened and fixed with the wire outlet of the device, that is, the first wire fixing clamp and the second wire fixing clamp can realize a fastening function of the lead wire and the fastening and fixing of the wire fixing clamp and the wire outlet part of the device, the waterproof sealing strip can realize the waterproof sealing between the first wire fixing clamp and the second wire fixing clamp, and the waterproof sealing ring can realize the waterproof sealing between the assembly formed by the first wire fixing clamp and the second wire fixing clamp and the wire outlet, that is, the waterproof sealing ring and the waterproof sealing strip can play a very good waterproof sealing effect. In turn, the protective wire assembly of this solution has an excellent waterproof performance while ensuring the tensile strength of the lead wire. It can simultaneously solve the technical problems of the poor waterproof performance of the hard plastic protective wire sheath and the small fastening force of the soft rubber protective wire sheath to the lead wire in the prior art, resulting in the low tensile strength of the lead wire. Moreover, the structure is simple, the assembly is convenient, and the cost is low.

In addition, the protective wire assembly provided in the above-mentioned technical solution of the present invention may also have the following additional technical features.

In a possible design, the first wire fixing clamp has a first inner surface facing the second wire fixing clamp and a first peripheral surface facing the peripheral wall of the wire outlet, and the first wire fixing groove is provided on the first inner surface, the second wire fixing clamp has a second inner surface facing the first wire fixing clamp and a second peripheral surface facing the peripheral wall of the wire outlet, and the second wire fixing groove is provided on the second inner surface, the waterproof sealing strip is provided between the first inner surface and the second inner surface, the waterproof sealing ring is sleeved on an outer peripheral surface formed by the first peripheral surface and the second peripheral surface.

It can be understood that the first peripheral surface of the first wire fixing clamp facing the peripheral wall of the wire outlet, that is, the surface that the first wire fixing clamp is used to contact and cooperate with the peripheral wall of the wire outlet, the first peripheral surface is not limited to one surface, but may also comprise a plurality of surfaces. Similarly, the second peripheral surface of the second wire fixing clamp facing the peripheral wall of the wire outlet, that is, the surface that the second wire fixing clamp is used to contact and cooperate with the peripheral wall of the wire outlet, the second peripheral surface is not limited to one surface, but may also comprise a plurality of surfaces. The first peripheral surface and the second peripheral surface jointly constitute the outer peripheral surface of the assembly formed by the first wire fixing clamp and the second wire fixing clamp. The waterproof sealing strip realizes the waterproof sealing between the first wire fixing clamp and the second wire fixing clamp. It also realizes the waterproof sealing around the lead wire, and the waterproof sealing ring realizes the waterproof sealing between the outer peripheral surface of the assembly formed by the first wire fixing clamp and the second wire fixing clamp and the peripheral wall of the wire outlet, thereby ensuring a good waterproof sealing effect.

In a possible design, an accommodating groove for accommodating the waterproof sealing strip is either provided on the first inner surface or the second inner surface. It is convenient to install the waterproof sealing strip on either the first wire fixing clamp or the second wire fixing clamp.

In a possible design, a material of the waterproof sealing strip is glue, and the glue is coated in the accommodating groove and can be wrapped around the contained lead wire to form waterproof sealing.

The material of the waterproof sealing strip is glue, after the glue solidifies, the waterproof sealing strip is formed. When the lead wire is inserted into the wire fixing groove (the first wire fixing groove or the second wire fixing groove), the glue can be conveniently wrapped around the contained lead wire to form a seal. When the first wire fixing clamp and the second wire fixing clamp are assembled together, the glue can also form a good waterproof sealing between the first wire fixing clamp and the second wire fixing clamp. Of course, the waterproof sealing strip can also be made of soft material such as rubber material, which can achieve the waterproof sealing effect.

In a possible design, the first peripheral surface is provided with a first peripheral groove for accommodating the waterproof sealing ring, the second peripheral surface is provided with a second peripheral groove for accommodating the waterproof sealing ring, and the waterproof sealing ring is accommodated in the first peripheral groove and the second peripheral groove.

The first peripheral groove and the second peripheral groove are arranged to facilitate the assembly of the waterproof sealing ring to the assembly formed by the first wire fixing clamp and the second wire fixing clamp, so that the waterproof sealing ring can be conveniently set at the position where waterproof sealing is required.

In a possible design, an edge of the first peripheral groove is adjacently provided with a first overflow groove, and an edge of the second peripheral groove is adjacently provided with a second overflow groove.

The design of the first overflow groove and the second overflow groove makes the protective wire assembly that has been assembled with the waterproof sealing ring is assembled to the wire outlet of the device with the lead wire, the deformation of the waterproof sealing ring is easy to occur, which is convenient for assembly and ensures the waterproof sealing effect of the protective wire assembly and the wire outlet of the device. It should be noted that the first overflow groove is provided adjacent to the edge of the first peripheral groove, it can also be understood that the groove width of the first peripheral groove near the notch is wider than the groove width near the bottom of the groove, and a step is formed between the groove wall near the notch and the groove wall near the bottom of the groove, so that one side of the groove wall of the first peripheral groove is a stepped wall, and the part of the groove that is close to the notch and relatively close to the bottom of the groove where the groove width becomes wider can be understood as the above-mentioned first overflow groove. Similarly, there is a second overflow groove adjacent to the edge of the second peripheral groove, and the same understanding can also be made, which will not be repeated here.

In a possible design, the wire accommodating cavity comprises a waterproof sealing section and a lead wire fastening section, the waterproof sealing strip intersects with the waterproof sealing section, and the lead wire fastening section is used to fix the lead wire.

The lead wire fastening section is used to fasten the lead wire, and the waterproof sealing strip cooperates with the waterproof sealing section to provide an excellent waterproof sealing performance.

In a possible design, the lead wire fastening section is provided with at least one occlusal section, and an inner wall of the occlusal section is provided with a plurality of convex teeth for clamping the lead wire, the occlusal section is installed at one end of the lead wire fastening section facing the wire outlet direction of the wire outlet.

The setting of the occlusal section enhances the fixing ability of the first wire fixing clamp and the second wire fixing clamp to the lead wire, and strengthens the tensile ability of the lead wire. The occlusal section is set at one end of the lead wire fastening section facing the wire outlet direction of the wire outlet, that is, the occlusal section is set close to the outlet end of the wire outlet. Of course, the setting position of the occlusal section in the lead wire fastening section is not limited to the above specific limitations, and the occlusal section can also be set in other positions in the lead wire fastening section as needed, without departing from the design concept of the present invention.

In a possible design, the waterproof sealing section is installed in a middle of a length direction of the wire accommodating cavity, and a cross-sectional area of the waterproof sealing section is larger than a cross-sectional area of the contained lead wire, the waterproof sealing strip and the waterproof sealing section intersect in a middle of the waterproof sealing section, and a length of the waterproof sealing section along the length direction of the wire accommodating cavity is longer than a cross-sectional width of the waterproof sealing strip at an intersection.

It should be understood that the waterproof sealing section is set in the middle of the length direction of the wire accommodating cavity, and the middle here is only relative to the end of the wire accommodating cavity, and is not used to limit the specific setting position of the waterproof sealing section in the length direction of the wire accommodating cavity. The cross-sectional area of the waterproof sealing section is designed to be larger than the cross-sectional area of the contained lead wire, so that the waterproof sealing section and the contained lead wire are in clearance fit, so that the waterproof sealing strip part can be located at the gap between the two. For the solution where the waterproof sealing strip is glue, the glue is filled to the gap between the two, which can make the sealing effect better. For the solution where the waterproof sealing strip is made of soft material such as rubber, it can make the deformation of the waterproof sealing strip easily occur when the first wire fixing clamp and the second wire fixing clamp are buckled and assembled, so that the sealing effect is better. The length of the waterproof sealing section is designed to be longer than the cross-sectional width of the waterproof sealing strip at the intersection. After the lead wire is installed, a space for filling or deformation of the waterproof sealing strip is formed in the length direction of the waterproof sealing section to ensure a good waterproof sealing performance.

In a possible design, at least one set of wire buckles is provided on two sides of each second wire fixing groove on the second wire fixing clamp, and the wire buckle is used to confine the lead wire in the second wire fixing groove, a wire buckle accommodating cavity for accommodating the wire buckle is provided on the first wire fixing clamp; or at least one set of wire buckles is provided on two sides of each first wire fixing groove on the first wire fixing clamp, and the wire buckle is used to confine the lead wire in the first wire fixing groove, and a wire buckle accommodating cavity for accommodating the wire buckle is provided on the second wire fixing clamp.

It should be understood that during assembly, the lead wire is inserted into the wire fixing groove of one of the wire fixing clamps, and then the other wire fixing clamp is buckled and assembled with the wire fixing clamp fitted with the lead wire. The setting of the above-mentioned wire buckle facilitates the use of the wire buckle to pre-fix each lead wire in the corresponding wire fixing groove during the lead wire assembly, thereby facilitating the buckling assembly of the first wire fixing clamp and the second wire fixing clamp. Specifically, at least one set of the wire buckles can be provided on at least one of the two ends of each first wire fixing groove; or at least one set of the wire buckles can be provided on at least one of the two ends of each second wire fixing groove, without departing from the design concept of the present invention.

In a possible design, a surface of the first wire fixing clamp facing the second wire fixing clamp is provided with a first positioning post and a first positioning hole, and a surface of the second wire fixing clamp facing the first wire fixing clamp is provided with a second positioning hole and a second positioning post, the first positioning post is inserted into the second positioning hole, and the second positioning post is inserted into the first positioning hole.

By using the cooperation of the positioning post and the positioning hole, the positioning and assembly of the first wire fixing clamp and the second wire fixing clamp are realized, the structure is simple, and the assembly is convenient.

In a possible design, the first wire fixing clamp and the second wire fixing clamp are connected by a connecting portion on one side, and the first wire fixing clamp, the second wire fixing clamp, and the connecting portion are an integral injection molding structure; or the first wire fixing clamp is provided with a plurality of first buckling parts, the second wire fixing clamp is provided with a plurality of second buckling parts, the first buckling part and the second buckling part are buckled and connected, so that the first wire fixing clamp is fixed on the second wire fixing clamp.

The first wire fixing clamp and the second wire fixing clamp adopt an integral injection molding structure, which is easy to process and has high connection strength, and makes the fastening and assembly operation of the first wire fixing clamp and the second wire fixing clamp more convenient. The first wire fixing clamp and the second wire fixing clamp can also be processed separately, and then using the cooperation of the first buckling part and the second buckling part, the first wire fixing clamp and the second wire fixing clamp are assembled together, and the assembly operation of the two is convenient.

The technical solution of the second aspect of the present invention provides a device with a lead wire, comprising: a housing provided with a wire outlet; and the protective wire assembly according to any one of the technical solutions of the above-mentioned first aspect, installed at the wire outlet.

The present invention has a device with a lead wire provided by the above-mentioned technical solution, because it comprises the protective wire assembly of any one of the technical solutions of the above-mentioned first aspect, and thus has the beneficial effect of the protective wire assembly of any one of the technical solutions of the above-mentioned first aspect.

In a possible design, the device with the lead wire is a motor.

The third aspect of the present invention provides a protective wire assembly, used for a device with a lead wire, and installed at a wire outlet of the device, comprising: a first wire clamp provided with a plurality of first wire grooves; a second wire clamp provided with a second wire groove corresponding to the first wire groove, the first wire clamp and the second wire clamp assembled in a fitting manner, the first wire groove and the second wire groove jointly form a wire accommodating cavity for accommodating the lead wire, an outer circumference of the lead wire can contact and seal the first wire groove and the second wire groove, and an assembly formed by the first wire clamp and the second wire clamp can contact and seal a peripheral wall of the wire outlet, a first wire holder installed on the first wire clamp, a hardness of the first wire holder is higher than that of the first wire clamp; and a second wire holder installed on the second wire clamp, and a hardness of the second wire holder is higher than that of the second wire clamp, and the lead wire can be crimped and fixed by the first wire holder and the second wire holder.

According to the protective wire assembly provided by the above-mentioned technical solutions of the present invention, the first wire clamp and the second wire clamp can realize the guiding and waterproof sealing of the lead wire, and the waterproof sealing between the protective wire assembly and the peripheral wall of the wire outlet of the device, so as to play a very good waterproof sealing role, the first wire holder and the second wire holder can achieve a good fastening of the lead wire, thereby playing a very good role in fixing the lead wire, and thus the protective wire assembly of this solution has an excellent waterproof performance while ensuring the tensile strength of the lead wire. It can simultaneously solve the technical problems of the poor waterproof performance of the hard plastic protective wire sheath and the small fastening force of the soft rubber protective wire sheath to the lead wire in the prior art, resulting in the low tensile strength of the lead wire. Moreover, the structure is simple, the assembly is convenient, and the cost is low.

In addition, the protective wire assembly provided by the above-mentioned technical solutions of the present invention may also have the following additional technical features.

In a possible design, the first wire clamp has a first mating surface that is attached the second wire clamp, the first wire groove is provided on the first mating surface, and the first wire clamp is provided with a first avoiding hole that penetrates the first mating surface, the first wire holder is fully or partially inserted into the first avoiding hole, and the first wire holder is provided with a third wire fixing groove arranged along a length direction of the first wire groove, the second wire clamp has a second mating surface that is attached to the first wire clamp, the second wire groove is provided on the second mating surface, and the second wire clamp is provided with a second avoiding hole that penetrates the second mating surface, the second wire holder is fully or partially inserted into the second avoiding hole, and the second wire holder is provided with a fourth wire fixing groove arranged along a length direction of the second wire groove, the third wire fixing groove and the fourth wire fixing groove jointly fix the lead wire.

By setting the first avoiding hole, the first wire holder can be fully or partially inserted into the inner side of the first wire clamp, and by setting the second avoiding hole, the second wire holder can be fully or partially inserted into the inner side of the second wire clamp, so that the third wire fixing groove set on the first wire holder and the fourth wire fixing groove set on the second wire holder can fix the lead wire together to ensure that the lead wire has strong tensile strength.

In a possible design, the number of the first avoiding holes is equal to the number of the first wire grooves, and are arranged along the length direction of the first wire groove, and the first wire holder is provided with a first wire fixing teeth equal to the number of the first avoiding holes, the first wire fixing teeth are correspondingly inserted into the first avoiding holes, and each of the first wire fixing teeth is provided with a third wire fixing groove, the number of the second avoiding holes is equal to the number of the second wire grooves, and are arranged along the length direction of the second wire groove, and the second wire holder is provided with a second wire fixing teeth equal to the number of the second avoiding holes, the second wire fixing teeth are correspondingly inserted into the second avoiding holes, each of the second wire fixing teeth is provided with one fourth wire fixing groove, and the corresponding third wire fixing groove and the fourth wire fixing groove jointly fix the lead wire.

By using the first wire groove and the second wire groove, the outer circumference of the lead wire is closely attached to the first wire groove and the second wire groove, so as to realize the guidance and waterproof sealing of the lead wire. By using the third wire fixing groove and the fourth wire fixing groove to realize the third wire fixing groove and the fourth wire fixing groove to fix the lead wire together, so as to achieve a good fastening effect on the lead wire. The first wire fixing teeth and the first avoiding holes are set correspondingly, which can form an alternate insertion structure between the first wire holder and the first wire clamp. The first wire fixing teeth are inserted into the first avoiding holes, and the ribs formed between two adjacent first avoiding holes are inserted into the gap between the two adjacent first wire fixing teeth, which is beneficial to improve the structure strength of the first wire holder and the first wire clamp after assembly. Similarly, the second wire fixing teeth and the second avoiding holes are set correspondingly, which is beneficial to improve the structural strength of the second wire holder and second wire clamp after assembly.

In a possible design, a groove wall of the third wire fixing groove is provided with a plurality of third convex teeth for clamping the lead wire, and a groove wall of the fourth wire fixing groove is provided with a plurality of fourth convex teeth for clamping the lead wire.

The setting of the third convex teeth and the fourth convex teeth enhances the fixing ability of the first wire holder and the second wire holder to the lead wire, and strengthens the tensile strength of the lead wire.

In a possible design, the first wire clamp has a first sealing surface for contact with the peripheral wall of the wire outlet, the second wire clamp has a second sealing surface for contact with the peripheral wall of the wire outlet, the first sealing surface and the second sealing surface jointly realize the contact sealing between the protective wire assembly and the peripheral wall of the wire outlet, so that play a good waterproof sealing role.

In a possible design, the first wire holder has a first abutment part for contact with the peripheral wall of the wire outlet, the second wire holder has a second abutment part for contact with the peripheral wall of the wire outlet, the first abutment part and the second abutment part jointly realize the fastening between the protective wire assembly and the peripheral wall of the wire outlet.

The first abutment part and the second abutment part are used to achieve a good fastening of the protective wire assembly and the wire outlet part of the device, so as to ensure that the lead wire has a strong tensile strength.

In a possible design, at least either the first abutment part or the second abutment part is provided with a convex portion, and the convex portion is used for inserting into a concave portion provided in the wire outlet portion of the device; or at least either the first abutment part or the second abutment part is provided with a concave portion, and the concave portion is used for inserting the convex portion provided in the wire outlet portion of the device.

Through the cooperation of the convex portion and the concave portion, the fastening effect of the protective wire assembly and the wire outlet part of the device can be further ensured.

In a possible design, a third positioning post is provided on one of the first wire holder and the second wire holder, a corresponding positioning hole is provided on the other of the first wire holder and the second wire holder, as well as on the first wire clamp and the second wire clamp, and the third positioning post is inserted into the positioning hole.

By using the cooperation of the third positioning post and the positioning hole, the positioning and assembly of the first wire holder, the second wire holder, the first wire clamp and the second wire clamp are realized, and the structure is simple and the assembly is convenient.

In a possible design, the first wire clamp and the second wire clamp are connected by a connecting portion on one side, and the first wire clamp, the second wire clamp, and the connecting portion are an integral injection molding structure; or the first wire clamp is provided with a plurality of first buckling parts, the second wire clamp is provided with a second buckling part corresponding to the first buckling part, and the first buckling part and the second buckling part are buckled and connected to make the first wire clamp is fixed on the second wire clamp.

The first wire clamp and the second wire clamp adopt an integral injection molding structure, which is easy to process and has high connection strength, and makes the assembly of the entire protective wire assembly more convenient. The first wire clamp and the second wire clamp can also be processed separately, and then use the cooperation of the first buckling part and the second buckling part to assemble the first wire clamp and the second wire clamp together, which makes the processing of the two convenient and the assembly operation simple.

In a possible design, the first wire clamp and the second wire clamp are both wire clamps of rubber material, the first wire holder and the second wire holder are both wire holders of plastic material.

The first wire clamp and the second wire clamp use rubber material to ensure that the protective wire assembly has a good waterproof sealing performance. The first wire holder and the second wire holder use plastic material such as nylon or PBT (polybutylene terephthalate) material to ensure that the protective wire assembly has a strong fastening force to the lead wire, and to ensure that the lead wire has a strong tensile strength. Of course, the materials of the first wire clamp and the second wire clamp are not limited to the above specific limitations, and the materials of the first wire holder and the second wire holder are not limited to the above specific limitations, but the first wire clamp and the second wire clamp, and the first wire holder and the second wire holder use different materials, and the hardness of the wire clamp is less than that of the wire holder.

The technical solution of the fourth aspect of the present invention provides a device with a lead wire, comprising: a housing provided with a wire outlet; and the protective wire assembly of any one of the technical solutions of above-mentioned third aspect, installed at the wire outlet.

The present invention has a device with a lead wire provided by the above-mentioned technical solution, because it comprises the protective wire assembly of any one of the technical solutions of the above-mentioned third aspect, and thus has the beneficial effect of the protective wire assembly of any one of the technical solutions of the above-mentioned third aspect.

In a possible design, the device with the lead wire is a motor.

The technical solution of the fifth aspect of the present invention provides a protective wire assembly, used for a device with a lead wire, and installed at a wire outlet of the device, comprising: a first wire fixing clamp provided with a plurality of first wire fixing grooves; a second wire fixing clamp provided with a second wire fixing groove corresponding to the first wire fixing groove, and the first wire fixing groove and the second wire fixing groove cooperate to form a wire accommodating cavity for fixing the lead wire; a first seal ring sleeved on an outer peripheral surface of the first wire fixing clamp; and a second seal ring sleeved on an outer peripheral surface of the second wire fixing clamp, and the first seal ring and the second seal ring jointly form a first sealing structure for contacting and sealing with a peripheral wall of the wire outlet on an outer peripheral surface of the protective wire assembly, and the first seal ring and the second seal ring jointly form a second sealing structure between the first wire fixing clamp and the second wire fixing clamp.

According to the protective wire assembly provided by the above-mentioned technical solutions of the present invention, the first seal ring and the second seal ring are respectively arranged on the outer peripheral surfaces of the first wire fixing clamp and the second wire fixing clamp. The cooperation of the first seal ring and the second seal ring is able to not only realize the waterproof sealing between the protective wire assembly and the wire outlet of the device, but also ensure that the waterproof sealing is formed between the two wire fixing clamps, thus playing a very good waterproof sealing effect. The first wire fixing clamp and the second wire fixing clamp cooperate to form a wire accommodating cavity for fixing the lead wire, which plays a very good role in fixing the lead wire, so that the protective wire assembly of this solution has an excellent waterproof performance while ensuring the tensile strength of the lead wire. It can simultaneously solve the technical problems of the poor waterproof performance of the hard plastic protective wire sheath and the small fastening force of the soft rubber protective wire sheath to the lead wire in the prior art, resulting in the low tensile strength of the lead wire. Moreover, the structure is simple, the assembly is convenient, and the cost is low.

In addition, the protective wire assembly provided in the above-mentioned technical solution of the present invention may also have the following additional technical features.

In a possible design, the first wire fixing clamp has a first inner surface facing the second wire fixing clamp and a first peripheral surface facing a peripheral wall of the wire outlet, the first wire fixing groove is provided on the first inner surface, and the first seal ring is sleeved on an outer peripheral surface formed by the first inner surface and the first peripheral surface, and intersects with the first wire fixing groove, the second wire fixing clamp has a second inner surface facing the first wire fixing clamp and a second peripheral surface facing a peripheral wall of the wire outlet, the second wire fixing groove is provided on the second inner surface, and the second seal ring is sleeved on an outer peripheral surface formed by the second inner surface and the second peripheral surface, and intersects with the second wire fixing groove, a portion of the first seal ring located on the first peripheral surface and a portion of the second seal ring located on the second peripheral surface jointly form the first sealing structure, and a portion of the first seal ring located on the first inner surface and a portion of the second seal ring located on the second inner surface jointly form the second sealing structure.

It can be understood that the first peripheral surface of the first wire fixing clamp facing the peripheral wall of the wire outlet, that is, the surface that the first wire fixing clamp is used to contact and cooperate with the peripheral wall of the wire outlet, the first peripheral surface is not limited to one surface, but may also comprise a plurality of surfaces. Similarly, the second peripheral surface of the second wire fixing clamp facing the peripheral wall of the wire outlet, that is, the surface that the second wire fixing clamp is used to contact and cooperate with the peripheral wall of the wire outlet, the second peripheral surface is not limited to one surface, but may also comprise a plurality of surfaces. The first peripheral surface and the second peripheral surface jointly constitute the outer peripheral surface of the protective wire assembly. The part of the first seal ring located on the first peripheral surface and the part of the second seal ring located on the second peripheral surface jointly form a first sealing structure, that is, the part of the first seal ring located on the first peripheral surface is in close contact with the wire outlet. The part of the second seal ring located on the second peripheral surface is in close contact with the wire outlet, so as to achieve the waterproof sealing between the outer peripheral surface of the protective wire assembly and the peripheral wall of the wire outlet. The part of the first seal ring located on the first inner surface and the part of the second seal ring located on the second inner surface jointly form a second sealing structure, so as to realize the waterproof sealing between the first wire fixing clamp and the second wire fixing clamp, and the lead wire and the protective wire assembly, thereby ensuring a good waterproof sealing effect.

In a possible design, the first inner surface is provided with a first inner groove, the first peripheral surface is provided with a first peripheral groove, and the first seal ring is accommodated in the first inner groove and the first peripheral groove, the second inner surface is provided with a second inner groove, the second peripheral surface is provided with a second peripheral groove, and the second seal ring is accommodated in the second inner groove and the second peripheral groove.

By setting the first inner groove and the first peripheral groove on the first wire fixing clamp to facilitate the assembly of the first seal ring on the first wire fixing clamp. By setting the second inner groove and the second peripheral groove on the second wire fixing clamp to facilitate the assembly of the second seal ring on the second wire fixing clamp.

In a possible design, at least either an edge of the first inner groove or an edge of the first peripheral groove is adjacently provided with a first overflow groove, at least either an edge of the second inner groove or an edge of the second peripheral groove is adjacently provided with a second overflow groove.

According to the design of the first overflow groove and the second overflow groove, when the first wire fixing clamp with the first seal ring and the second wire fixing clamp with the second seal ring are assembled, and the protective wire assembly is assembled to the device with the lead wire at the wire outlet, the deformation of the first seal ring and the second seal ring are easy to occur, thereby ensuring a good waterproof sealing between the first wire fixing clamp and the second wire fixing clamp, and between the protective wire assembly and the lead wire. It should be noted that at least either the edge of the first inner groove or the edge of the first peripheral groove is adjacently provided with a first overflow groove. It can also be understood that at least either the groove width of first inner groove or the groove width of the first peripheral groove near the notch is greater than the groove width near the bottom of the groove, and a step is formed between the groove wall near the notch and the groove wall near the bottom of the groove, and make at least one side of the first inner groove and the first peripheral groove as a stepped wall. the part of the groove that is close to the notch and relatively close to the bottom of the groove where the groove width becomes wider can be understood as the above-mentioned first overflow groove. Similarly, at least either the edge of the second inner groove or the edge of the second peripheral groove is adjacently provided with a second overflow groove, and the same understanding can also be made, which will not be repeated here.

In a possible design, the first inner surface is provided with a boss, the first wire fixing groove is provided on the boss, the second inner surface is provided with a groove, the second wire fixing groove is provided on a bottom wall of the groove, and the first wire fixing clamp is buckled with the second wire fixing clamp, the boss is installed in the groove; or the second inner surface is provided with a boss, the second wire fixing groove is provided on the boss, the first inner surface is provided with a groove, the first wire fixing groove is provided on a bottom wall of the groove, and the first wire fixing clamp is buckled with the second wire fixing clamp, and the boss is installed in the groove.

By using the cooperation of the boss and the groove, not only realizes the positioning and assembly of the first wire fixing clamp and the second wire fixing clamp, but also makes the connection strength between the two higher.

In a possible design, the wire accommodating cavity comprises a waterproof sealing section and a lead wire fastening section, the first seal ring and the second seal ring both intersect with the waterproof sealing section, and the lead wire fastening section is used for fixing the lead wire.

The lead wire fastening section is used to fasten the lead wire, the first seal ring and the second seal ring cooperate with the waterproof sealing section to provide an excellent waterproof sealing performance.

In a possible design, the lead wire fastening section is provided with at least one occlusal section, and an inner wall of the occlusal section is provided with a plurality of convex teeth for clamping the lead wire, the occlusal section is provided at one end of the lead wire fastening section facing a wire outlet direction of the wire outlet.

The setting of the occlusal section enhances the fixing ability of the first wire fixing clamp and the second wire fixing clamp to the lead wire, and strengthens the tensile strength of the lead wire. The occlusal section is set at one end of the lead wire fastening section facing the wire outlet direction of the wire outlet, that is, the occlusal section is set at the end of the lead wire fastening section facing the outside of the device. Of course, the setting location of the occlusal section in the lead wire fastening section is not limited to the above specific limitations, and the occlusal section can also be set in other locations in the lead wire fastening section as needed without departing from the design concept of the present invention.

In a possible design, the waterproof sealing section is installed in a middle of length direction of the wire accommodating cavity, and a cross-sectional area of the waterproof sealing section is larger than a cross-sectional area of the contained lead wire, the waterproof sealing section comprises a first waterproof sealing section located on the first wire fixing clamp and a second waterproof sealing section located on the second wire fixing clamp, and the first seal ring intersects with the first waterproof sealing section, a length of the first waterproof sealing section along the length direction of the wire accommodating cavity is greater than a cross-sectional width of the first seal ring at an intersection, and the second seal ring intersects with the second waterproof sealing section and a length of the second waterproof sealing section along the length direction of the wire accommodating cavity is greater than a cross-sectional width of the second seal ring at an intersection.

It should be understood that the waterproof sealing section is set in the middle of the length direction of the wire accommodating cavity, and the middle here is only relative to the end of the wire accommodating cavity, and is not used to limit the specific setting position of the waterproof sealing section in the length direction of the wire accommodating cavity. The cross-sectional area of the waterproof sealing section is designed to be larger than the cross-sectional area of the contained lead wire, so that the waterproof sealing section and the contained lead wire are in clearance fit. After the lead wire is installed in this way, a space for deformation of the first seal ring and the second sealing section can be formed in the width direction of the waterproof sealing section. By designing the length of the waterproof sealing section to be greater than the cross-sectional width of the seal ring (the first seal ring and the second seal ring), after the lead wire is installed in this way, a space for deformation of the first seal ring and the second sealing section is formed in the length direction of the waterproof sealing section. When the first wire fixing clamp and the second wire fixing clamp are attached and assembled, and when the protective wire assembly is assembled to a device with a lead wire, the deformation of the first seal ring and the second seal ring is easy to occur, thereby ensuring a good waterproof sealing between the first wire fixing clamp and the second wire fixing clamp, and between the protective wire assembly and the lead wire.

In a possible design, at least one set of wire buckles is provided on two sides of each of the second wire fixing groove on the second wire fixing clamp, and the wire buckle is used for confining the lead wire in the second wire fixing groove and, a wire buckle accommodating cavity for accommodating the wire buckle is provided on the first wire fixing clamp; or at least one set of wire buckles is provided on two sides of each of the first wire fixing groove on the first wire fixing clamp, and the wire buckle is used for confining the lead wire in the first wire fixing groove, and a wire buckle accommodating cavity for accommodating the wire buckle is provided on the second wire fixing clamp.

It should be understood that during assembly, the lead wire is inserted into the wire fixing groove of one of the wire fixing clamps, and then the other wire fixing clamp is buckled and assembled with the wire fixing clamp fitted with the lead wire. The setting of the above-mentioned wire buckle facilitates the use of the wire buckle to pre-fix each lead wire in the corresponding wire fixing groove during the lead wire assembly, thereby facilitating the buckling assembly of the first wire fixing clamp and the second wire fixing clamp. Specifically, at least one set of the wire buckles can be provided on at least one of the two ends of each first wire fixing groove; or at least one set of the wire buckles can be provided on at least one of the two ends of each second wire fixing groove, without departing from the design concept of the present invention.

In a possible design, a surface of the first wire fixing clamp facing the second wire fixing clamp is provided with a first positioning post and a first positioning hole, and a surface of the second wire fixing clamp facing the first wire fixing clamp is provided with a second positioning hole and a second positioning post, the first positioning post is inserted into the second positioning hole, and the second positioning post is inserted into the first positioning hole.

By using the cooperation of the positioning post and the positioning hole, the positioning and assembly of the first wire fixing clamp and the second wire fixing clamp are realized, the structure is simple, and the assembly is convenient.

In a possible design, the first wire fixing clamp and the second wire fixing clamp are connected by a connecting portion on one side, and the first wire fixing clamp, the second wire fixing clamp and the connecting portion are an integral injection molding structure; or the first wire fixing clamp is provided with a plurality of first buckling parts, the second wire fixing clamp is provided with a plurality of second buckling parts, and the first buckling part and the second buckling part are buckled and connected to make the first wire fixing clamp is fixed on the second wire fixing clamp.

The first wire fixing clamp and the second wire fixing clamp adopt an integral injection molding structure, which is easy to process and has high connection strength, and makes the fastening and assembly operation of the first wire fixing clamp and the second wire fixing clamp more convenient. The first wire fixing clamp and the second wire fixing clamp can also be processed separately, and then using the cooperation of the first buckling part and the second buckling part, the first wire fixing clamp and the second wire fixing clamp are assembled together, and the assembly operation of the two is convenient.

The technical solution of the sixth aspect of the present invention provides a device with a lead wire, comprising: a housing provided with a wire outlet; and the protective wire assembly according to any one of the technical solutions of the above-mentioned fifth aspect, installed at the wire outlet.

The present invention has a device with a lead wire provided by the above-mentioned technical solution, because it comprises the protective wire assembly of any one of the technical solutions of the above-mentioned fifth aspect, and thus has the beneficial effect of the protective wire assembly of any one of the technical solutions of the above-mentioned fifth aspect.

In a possible design, the device with the lead wire is a motor.

Additional aspects and advantages of the invention will be apparent from the following description; or may be learned by practice of the invention.

### BRIEF DESCRIPTION OF THE DRAWINGS

The above and/or additional aspects and advantages of the present application will become apparent and readily understood from the description of embodiments in conjunction with the following drawings:
Fig. 1 is a schematic structural diagram of a protective wire assembly of an embodiment of the present invention.;
Fig. 2 is a schematic structural diagram of a first wire fixing clamp, a second wire fixing clamp and a waterproof sealing strip in a protective wire assembly shown in Fig. 1;
Fig. 3 is a schematic structural diagram of a waterproof sealing ring in a protective wire assembly shown in Fig. 1;
Fig. 4 is a schematic structural diagram of a first wire fixing clamp in the structure shown in Fig. 2;
Fig. 5 is a schematic structural diagram of a second wire fixing clamp and a waterproof sealing strip in the structure shown in Fig. 2;
Fig. 6 is a schematic structural diagram of a second wire fixing clamp in the structure shown in Fig. 5;
Fig. 7 is a schematic structural diagram of a device with a lead wire of an embodiment of the present invention;
Fig. 8 is an enlarged schematic structural diagram of section A in Fig. 7;
Fig. 9 is a schematic structural diagram of section B-B in Fig. 7;
Fig. 10 is an assembly schematic structural diagram of a protective wire assembly of an embodiment of the present invention;
Fig. 11 is an exploded schematic structural diagram of a protective wire assembly shown in Fig. 10;
Fig. 12 is a schematic structural diagram of a first wire holder in a protective wire assembly shown in Fig. 11;
Fig. 13 is a schematic structural diagram of a first wire clamp in a protective wire assembly shown in Fig. 11;
Fig. 14 is a schematic structural diagram of an assembly of a first wire holder shown in Fig. 12 and a first wire clamp shown in Fig. 13;
Fig. 15 is a schematic structural diagram of a second wire holder in a protective wire assembly shown in Fig. 11;
Fig. 16 is a schematic structural diagram of a second wire clamp in a protective wire assembly shown in Fig. 11;
Fig. 17 is an assembly schematic structural diagram of a second wire holder shown in Fig. 15 and a second wire clamp shown in Fig. 16;
Fig. 18 is a schematic structural diagram of a device with a lead wire of an embodiment of the present invention;
Fig. 19 is an enlarged schematic structural diagram of section B in Fig. 18;
Fig. 20 is a schematic structural diagram of a protective wire assembly of an embodiment of the present invention;
Fig. 21 is an assembly schematic structural diagram of a first wire fixing clamp and a first seal ring in a protective wire assembly shown in Fig. 20;
Fig. 22 is a schematic structural diagram of a first wire fixing clamp in an assembly structure shown in Fig. 21;
Fig. 23 is a schematic structural diagram of a first seal ring in an assembly structure shown in Fig. 21;
Fig. 24 is an assembly schematic structural diagram of a second wire fixing clamp and a second seal ring in a protective wire assembly shown in Fig. 20;
Fig. 25 is a schematic structural diagram of a second wire fixing clamp in an assembly structure shown in Fig. 24;
Fig. 26 is a schematic structural diagram of a second seal ring in an assembly structure shown in Fig. 24;
Fig. 27 is a schematic structural diagram of a device with a lead wire in an embodiment of the present invention; and
Fig. 28 is an enlarged schematic structural diagram of section C in Fig. 27.

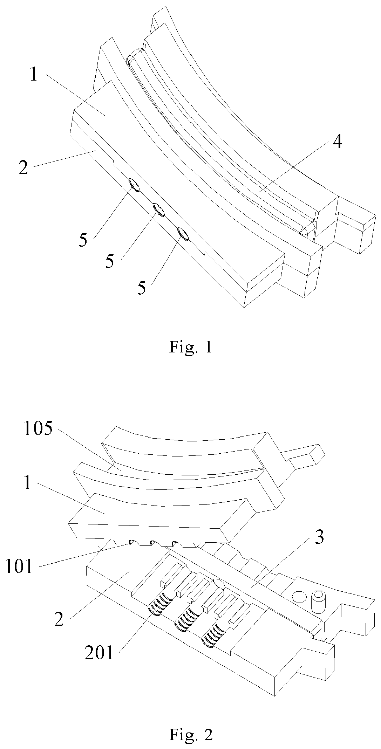

The corresponding relationship between the reference signs and component names in Fig. 1 to Fig. 28 is as follows:
1 first wire fixing clamp, 2 second wire fixing clamp, 3 waterproof sealing strip, 4 waterproof sealing ring, 5 wire accommodating cavity, 6 lead wire, 7 first housing, 8 second housing, 9 wire outlet, 10 first wire clamp, 11 second wire clamp, 12 first wire holder, 13 second wire holder, 15 first seal ring, 16 second seal ring, 101 first wire fixing groove, 102 first inner surface, 103 first peripheral surface, 105 first peripheral groove, 106 first overflow groove, 107 first waterproof sealing section, 108 first lead wire fastening section, 109 first occlusal section, 1091 first convex teeth, 110 wire buckle accommodating cavity, 111 first positioning post, 112 first positioning hole, 113 boss, 201 second wire fixing groove, 202 second inner surface, 203 second peripheral surface, 204 accommodating groove, 205 second peripheral groove, 206 second overflow groove, 207 second waterproof sealing section, 208 second lead wire fastening section, 209 second occlusal section, 2091 second convex teeth, 210 wire buckle, 211 second positioning post, 212 second positioning hole, 213 groove, 301 first wire groove, 302 first mating surface, 303 first avoiding hole, 304 first sealing surface, 305 fourth positioning hole, 401 second wire groove, 402 second mating surface, 403 second avoiding hole, 404 second sealing surface, 405 fifth positioning hole, 501 first wire fixing teeth, 502 third wire fixing groove, 503 third convex teeth, 504 first abutment part, 505 third positioning hole, 601 second wire fixing teeth, 602 fourth wire fixing groove, 603 fourth convex teeth, 604 second abutment part, 605 third positioning post, 701 first inner groove, 702 second inner groove.

### DETAILED DESCRIPTION OF THE EMBODIMENTS

In order that the above-mentioned objectives, features and advantages of the present application can be understood more clearly, a further detailed description of the present application will be given below in connection with the accompanying drawings and specific embodiments. It should be noted that the embodiments of the present application and the features in the embodiments can be combined with each other if there is no conflict.

In the following description, numerous specific details are set forth in order to provide a thorough understanding of the present application. However, the present application can also be implemented in other manners than those described herein. Therefore, the protection scope of the present application is not limited to the specific embodiments disclosed below.

The following describes a protective wire assembly and a device with a lead wire according to some embodiments of the present invention with reference to Fig. 1 to Fig. 28.

As shown in Figs. 1 to 7, some embodiments of the first aspect of the present invention provides a protective wire assembly, used for a device with a lead wire, and installed at a wire outlet 9 of the device. The protective wire assembly comprising: a first wire fixing clamp 1, a second wire fixing clamp 2, a waterproof sealing strip 3 and a waterproof sealing ring 4.

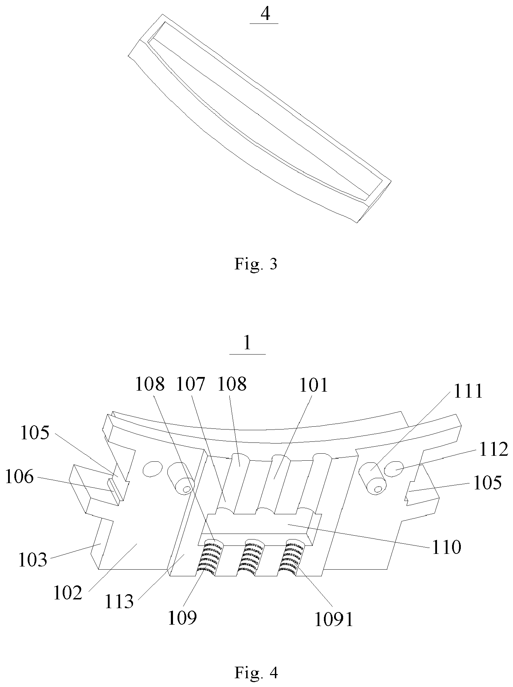

Specifically, as shown in Figs. 1, 2 and 5, a plurality of first wire fixing grooves 101 are provided on the first wire fixing clamp 1, the second wire fixing clamp 2 is provided with a second wire fixing groove 201 corresponding to the first wire fixing groove 101. The first wire fixing groove 101 and the second wire fixing groove 201 cooperate to form a wire accommodating cavity 5 for fixing the lead wire 6. As shown in Fig. 2, the waterproof sealing strip 3 is provided between the first wire fixing clamp 1 and the second wire fixing clamp 2, and intersects with the wire accommodating cavity 5 to form a waterproof sealing between the first wire fixing clamp 1 and the second wire fixing clamp 2. As shown in Figs. 1 and 3, the waterproof sealing ring 4 is sleeved on the outer peripheral surface of the assembly formed by the first wire fixing clamp 1 and the second wire fixing clamp 2 for contacting and sealing with the peripheral wall of the wire outlet 9.

It should be understood that the first wire fixing clamp 1 and the second wire fixing clamp 2 are mainly used to fix the lead wire 6. The waterproof sealing ring 4 and the waterproof sealing strip 3 are mainly used for waterproof sealing. Based on their respective functions, the first wire fixing clamp 1 and the second wire fixing clamp 2, and the waterproof sealing ring 4 and the waterproof sealing strip 3 can be made of different materials, such as the first wire fixing clamp 1 and the second wire fixing clamp 2 use plastic material, and the waterproof sealing ring 4 uses rubber material, the waterproof sealing strip 3 uses glue or rubber material. Of course, the specific material is not limited to the above-mentioned specific limitations, and those skilled in the art can choose reasonably according to actual needs.

The protective wire assembly provided by the above-mentioned embodiment of the present invention, the first wire fixing clamp 1 and the second wire fixing clamp 2 cooperate to form a wire accommodating cavity 5 for fixing the lead wire6, which can play a very good role in fixing the lead wire 6. The assembly formed by the first wire fixing clamp 1 and the second wire fixing clamp 2 can be fastened and fixed with the wire outlet 9 of the device, that is, the first wire fixing clamp 1 and the second wire fixing clamp 2 can realize the fastening function of the lead wire 6 and the fastening and fixing of the wire fixing clamp and the wire outlet 9 part of the device, the waterproof sealing strip 3 can realize the waterproof sealing between the first wire fixing clamp 1 and the second wire fixing clamp 2, and the waterproof sealing ring 4 can realize the waterproof sealing between the assembly formed by the first wire fixing clamp 1 and the second wire fixing clamp 2 and the wire outlet 9, that is, the waterproof sealing ring 4 and the waterproof sealing strip 3 can play a very good waterproof sealing effect. In turn, the protective wire assembly of this solution has an excellent waterproof performance while ensuring the tensile strength of the lead wire 6. It can simultaneously solve the technical problems of the poor waterproof performance of the hard plastic protective wire sheath and the small fastening force of the soft rubber protective wire sheath to the lead wire 6 in the prior art, resulting in the low tensile strength of the lead wire 6. Moreover, the structure is simple, the assembly is convenient, and the cost is low.

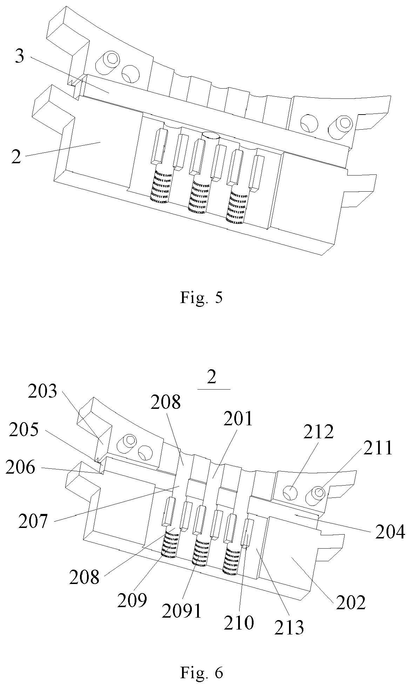

In an embodiment of the present invention, as shown in Fig. 4, the first wire fixing clamp 1 has a first inner surface 102 facing the second wire fixing clamp 2 and a first peripheral surface 103 facing the peripheral wall of the wire outlet 9, and the first wire fixing groove 101 is provided on the first inner surface 102. As shown in Fig. 6, the second wire fixing clamp 2 has a second inner surface 202 facing the first wire fixing clamp 1 and a second peripheral surface 203 facing the peripheral wall of the wire outlet 9, and the second wire fixing groove 201 is provided on the second inner surface 202. As shown in Fig. 2, the waterproof sealing strip 3 is set between the first inner surface 102 and the second inner surface 202. As shown in Fig. 1, the waterproof sealing ring 4 is sleeved on the outer peripheral surface formed by the first peripheral surface 103 and the second peripheral surface 203.

It can be understood that the first peripheral surface 103 of the first wire fixing clamp 1 facing the peripheral wall of the wire outlet 9, that is, the surface that the first wire fixing clamp 1 is used to contact and cooperate with the peripheral wall of the wire outlet 9, the first peripheral surface 103 is not limited to one surface, but may also comprise a plurality of surfaces. Similarly, the second peripheral surface 203 of the second wire fixing clamp 2 facing the peripheral wall of the wire outlet 9, that is, the surface that the second wire fixing clamp 2 is used to contact and cooperate with the peripheral wall of the wire outlet 9, the second peripheral surface 203 is not limited to one surface, but may also comprise a plurality of surfaces. The first peripheral surface 103 and the second peripheral surface 203 jointly constitute the outer peripheral surface of the assembly formed by the first wire fixing clamp 1 and the second wire fixing clamp 2. The waterproof sealing strip 3 realizes a waterproof sealing between the first wire fixing clamp 1 and the second wire fixing clamp 2. It also realizes the waterproof sealing around the lead wire 6, and the waterproof sealing ring 4 realizes the waterproof sealing between the outer peripheral surface of the assembly formed by the first wire fixing clamp 1 and the second wire fixing clamp 2 and the peripheral wall of the wire outlet 9, thereby ensuring a good waterproof sealing effect.

In an embodiment of the present invention, an accommodating groove 204 for accommodating the waterproof sealing strip 3 is provided on one of the first inner surface 102 and the second inner surface 202. It is convenient to install the waterproof sealing strip 3 on one of the first wire fixing clamp 1 and the second wire fixing clamp 2. In a specific embodiment, as shown in Figs. 2, 5 and 6, the second inner surface 202 is provided with an accommodating groove 204 for accommodating a waterproof sealing strip 3.

In a specific embodiment, the material of the waterproof sealing strip 3 is glue, and the glue is coated in the accommodating groove 204 and can be wrapped around the contained lead wire 6 to form waterproof sealing. In the specific assembly, the glue can be applied to the accommodating groove 204 of the second wire fixing clamp 2 first, and then the lead wire 6 is put into the second wire fixing groove 201 of the second wire fixing clamp 2, and the first wire fixing clamp 1 is closed, and then put a waterproof sealing ring 4 on the outer periphery of the first wire fixing clamp 1 and the second wire fixing clamp 2 to form a protective wire assembly, and the glue solidifies to form a waterproof sealing strip 3. The material of the waterproof sealing strip 3 is glue, after the glue solidifies, the waterproof sealing strip 3 is formed. When the lead wire 6 is inserted into the wire fixing groove (the first wire fixing groove 101 or the second wire fixing groove 201), the glue can be conveniently wrapped around the contained lead wire 6 to form a seal. When the first wire fixing clamp 1 and the second wire fixing clamp 2 are assembled together, the glue can also form a good waterproof sealing between the first wire fixing clamp 1 and the second wire fixing clamp 2. Of course, the waterproof sealing strip 3 can also be made of soft material such as rubber material, which can achieve the waterproof sealing effect.

In an embodiment of the present invention, as shown in Fig. 4, the first peripheral surface 103 is provided with a first peripheral groove 105 for accommodating the waterproof sealing ring 4, as shown in Figs. 5 and 6, the second peripheral surface 203 is provided with a second peripheral groove 205 for accommodating the waterproof sealing ring 4, and the waterproof sealing ring 4 is accommodated in the first peripheral groove 105 and the second peripheral groove 205. The first peripheral groove 105 and the second peripheral groove 205 are arranged to facilitate the assembly of the waterproof sealing ring 4 to the assembly formed by the first wire fixing clamp 1 and the second wire fixing clamp 2, so that the waterproof sealing ring 4 can be conveniently set at the position where waterproof sealing is required.

In an embodiment of the present invention, as shown in Fig. 4, an edge of the first peripheral groove 105 is adjacently provided with a first overflow groove 106. It can also be understood that the groove width of the first peripheral groove 105 near the notch is wider than the groove width near the bottom of the groove, and a step is formed between the groove wall near the notch and the groove wall near the bottom of the groove, so that one side of the groove wall of the first peripheral groove 105 is a stepped wall, and the part of the groove that is close to the notch and relatively close to the bottom of the groove where the groove width becomes wider can be understood as the above-mentioned first overflow groove 106. As shown in Figs. 5 and 6, there is a second overflow groove 206 adjacent to the edge of the second peripheral groove 205, and the second overflow groove 206 can be understood with reference to the first overflow groove 106 described above, and will not be repeated here.

The design of the first overflow groove 106 and the second overflow groove 206 makes the protective wire assembly that has been assembled with the waterproof sealing ring 4 is assembled to the wire outlet 9 of the device with the lead wire 6, the deformation of the waterproof sealing ring is easy to occur, which is convenient for assembly and ensures the waterproof sealing effect of the protective wire assembly and the wire outlet 9 of the device.

In an embodiment of the present invention, as shown in Figs. 1 and 4, the first inner surface 102 is provided with a boss 113, the first wire fixing groove 110 is provided on the boss 113, as shown in Figs. 1, 5 and 6, the second inner surface 202 is provided with a groove 213, the second wire fixing groove 201 is provided on a bottom wall of the groove 213, and the first wire fixing clamp 1 is buckled with the second wire fixing clamp 2, the boss 113 is installed in the groove 213.

In some embodiments, the second inner surface 202 is provided with a boss113, the second wire fixing groove 201 is provided on the boss 113, the first inner surface 102 is provided with a groove, the first wire fixing groove 101 is provided on the bottom wall of the groove, the first wire fixing clamp 1 and the second wire fixing clamp 2 are buckled together, and the boss 113 is installed in the groove.

By using the cooperation of the boss 113 and the groove 213, not only realizes the positioning and assembly of the first wire fixing clamp 1 and the second wire fixing clamp 2, but also makes the connection strength between the two higher.

In some embodiments of the present invention, as shown in Figs. 4 to 6, the wire accommodating cavity 5 comprises a waterproof sealing section and a lead wire fastening section, the waterproof sealing strip 3 intersects with the waterproof sealing section, and the lead wire fastening section is used for fixing the lead wire 6. The lead wire fastening section is used to fasten the lead wire 6, the waterproof sealing strip 3 cooperates with the waterproof sealing section to provide an excellent waterproof sealing performance.

In a specific embodiment, the wire accommodating cavity 5 comprises a waterproof sealing section and a lead wire fastening section respectively arranged at two ends of the waterproof sealing ring 4, that is, the two ends of the waterproof sealing section are respectively provided with a lead wire fastening section. Therein, as shown in Figs. 4 to 6, the waterproof sealing section comprises a first waterproof sealing section 107 located on the first wire fixing clamp 1 and a second waterproof sealing section 207 located on the second wire fixing clamp 2. The lead wire fastening section comprises a first lead wire fastening section 108 located on the first wire fixing clamp 1 and a second lead wire fastening section 208 located on the second wire fixing clamp 2.

In an embodiment of the present invention, as shown in Figs. 4 to 6, the lead wire fastening section is provided with at least one occlusal section, and an inner wall of the occlusal section is provided with a plurality of convex teeth for clamping the lead wire 6. The setting of the occlusal section enhances the fixing ability of the first wire fixing clamp 1 and the second wire fixing clamp 2 to lead wire 6, and strengthens the tensile strength of lead wire 6. In a specific embodiment, the lead wire fastening section comprises a first lead wire fastening section 108 located on the first wire fixing clamp 1 and a second lead wire fastening section 208 located on the second wire fixing clamp 2. As shown in Fig. 4, the first lead wire fastening section 108 is provided with at least one first occlusal section 109, and the inner wall of the first occlusal section 109 is provided with a plurality of first convex teeth 1091 for clamping the lead wire 6. As shown in Figs. 5 and 6, the second lead wire fastening section 208 is provided with at least one second occlusal section 209, and the inner wall of the second occlusal section 209 is provided with a plurality of second convex teeth 2091 for clamping the lead wire 6, that is, the occlusal section comprises the first occlusal section109 and second occlusal section 209.

In a specific embodiment, as shown in Figs. 4 to 6, the occlusal section is installed at one end of the lead wire fastening section facing the wire outlet direction of the wire outlet 9. It can also be understood that the occlusal section is set close to the outlet end of the wire outlet 9. Of course, the setting position of the occlusal section in the lead wire fastening section is not limited to the above specific limitations, and the occlusal section can also be set in the other locations of the lead wire fastening section as needed without departing from the design concept of the present invention.

In an embodiment of the present invention, the waterproof sealing section is installed in a middle of a length direction of the wire accommodating cavity 5, and a cross-sectional area of the waterproof sealing section is larger than a cross-sectional area of the contained lead wire 6.

It should be understood that the waterproof sealing section is set in the middle of the length direction of the wire accommodating cavity 5, and the middle here is only relative to the end of the wire accommodating cavity 5, and is not used to limit the specific setting position of the waterproof sealing section in the length direction of the wire accommodating cavity 5. The cross-sectional area of the waterproof sealing section is designed to be larger than the cross-sectional area of the contained lead wire 6, so that the waterproof sealing section and the contained lead wire 6 are in clearance fit, so that the waterproof sealing strip 3 can be located at the gap between the two. For the solution where the waterproof sealing strip 3 is glue, the glue is filled to the gap between the two to make the sealing effect better. For the solution that the waterproof sealing strip 3 is soft material such as rubber, the deformation of the waterproof sealing strip 3 can easily occur when the first wire fixing clamp 1 and the second wire fixing clamp 2 are buckled and assembled, thereby making the sealing effect better.

In an embodiment of the present invention, as shown in Figs. 5 and 6, the waterproof sealing strip 3 and the waterproof sealing section intersect in a middle of the waterproof sealing section, and a length of the waterproof sealing section along the length direction of the wire accommodating cavity 5 is longer than a cross-sectional width of the waterproof sealing strip 3 at an intersection. The above-mentioned design can form a space for filling or deformation of the waterproof sealing strip 3 in the length direction of the waterproof sealing section after the lead wire 6 is installed, thereby ensuring a good waterproof sealing performance.

In an embodiment of the present invention, as shown in Fig. 6, at least one set of wire buckles 210 is provided on two sides of each second wire fixing groove 201 on the second wire fixing clamp 2, and the wire buckle 210 is used to confine the lead wire 6 in the second wire fixing groove 201, a wire buckle accommodating cavity 110 for accommodating the wire buckle 210 is provided on the first wire fixing clamp 1.

In some embodiments, at least one set of wire buckles 210 is provided on two sides of each first wire fixing groove 101 on the first wire fixing clamp 1, and the wire buckle 210 are used to confine the lead wire 6 in the first wire fixing groove 101, and a wire buckle accommodating cavity 110 for accommodating the wire buckle 210 is provided on the second wire fixing clamp 2.

It should be understood that during assembly, the lead wire 6 is inserted into the wire fixing groove of one of the wire fixing clamps, and then the other wire fixing clamp is buckled and assembled with the wire fixing clamp fitted with the lead wire 6. The setting of the above-mentioned wire buckle 210 facilitates the use of the wire buckle to pre-fix each lead wire 6 in the corresponding wire fixing groove during the lead wire 6 assembly, thereby facilitating the buckling assembly of the first wire fixing clamp 1 and the second wire fixing clamp 2. Specifically, at least one set of the wire buckles can be provided on at least one of the two ends of each first wire fixing groove 101; or at least one set of the wire buckles 210 can be provided on at least one of the two ends of each second wire fixing groove 201, without departing from the design concept of the present invention.

In an embodiment of the present invention, as shown in Fig.4, a surface of the first wire fixing clamp 1 facing the second wire fixing clamp 2 is provided with a first positioning post 111 and a first positioning hole 112, as shown in Figs. 5 and 6, a surface of the second wire fixing clamp 2 facing the first wire fixing clamp 1 is provided with a second positioning hole 212 and a second positioning post 211, the first positioning post 111 is inserted into the second positioning hole 212, and the second positioning post 211 is inserted into the first positioning hole 112. By using the cooperation of the positioning post and the positioning hole, the positioning and assembly of the first wire fixing clamp 1 and the second wire fixing clamp 2 are realized, the structure is simple, and the assembly is convenient.

In an embodiment of the present invention, the first wire fixing clamp 1 and the second wire fixing clamp 2 are connected by a connecting portion on one side, and the first wire fixing clamp 1, the second wire fixing clamp 2, and the connecting portion are an integral injection molding structure. By using an integral injection molding structure, which is easy to process and has high connection strength, and makes the fastening and assembly operation of the first wire fixing clamp 1 and the second wire fixing clamp 2 more convenient.

In an embodiment of the present invention, the first wire fixing clamp 1 is provided with a plurality of first buckling parts, the second wire fixing clamp 2 is provided with a plurality of second buckling parts, the first buckling part and the second buckling part are buckled and connected, so that the first wire fixing clamp 1 is fixed on the second wire fixing clamp 2. The above-mentioned design means that the first wire fixing clamp 1 and the second wire fixing clamp 2 can be processed separately, and then using the cooperation of the first buckling part and the second buckling part, the first wire fixing clamp 1 and the second wire fixing clamp 2 are assembled together, and the assembly operation of the two is convenient.

In an embodiment of the present invention, the first wire fixing clamp 1 and the second wire fixing clamp 2 are both nylon material or PBT material, the waterproof sealing ring 4 is a rubber material seal ring, and the waterproof sealing strip 3 is glue material.

The first wire fixing clamp 1 and the second wire fixing clamp 2 are optionally made of plastic material such as nylon material or PBT (polybutylene terephthalate) material to ensure that the protective wire assembly has a strong fastening force to the lead wire 6 and to ensure that the lead wire 6 has strong tensile strength. The waterproof sealing ring 4 optionally uses rubber material to ensure that the protective wire assembly has a good waterproof sealing performance. Of course, the materials of the first wire fixing clamp 1 and the second wire fixing clamp 2 are not limited to the above specific limitations, the material of the waterproof sealing ring 4 is not limited to the above specific limitations, and the material of the waterproof sealing strip 3 is not limited to the above specific limitations, but the first wire fixing clamp 1 and the second wire fixing clamp 2 and the waterproof sealing ring 4 and the waterproof sealing strip 3 are made of different materials.

In summary, the protective wire assembly provided by the embodiment of the present invention has the following beneficial effects.

The waterproof sealing ring 4 is set on the outer peripheral surface of the wire fixing clamp assembly formed by the first wire fixing clamp 1 and the second wire fixing clamp 2, and the waterproof sealing strip 3 is set between the first wire fixing clamp 1 and the second wire fixing clamp 2. Wherein, the waterproof sealing ring 4 and the waterproof sealing strip 3 can play a very good waterproof sealing role, and the first wire fixing clamp 1 and second wire fixing clamp 2 can play a very good role in fixing the lead wire 6. The first wire fixing clamp 1 and the second wire fixing clamp 2 cooperate to form the wire accommodating cavity 5, the lead wire fastening section of the wire accommodating cavity 5 realizes the fastening of the lead wire 6. Wherein the setting of the occlusal section strengthens the tensile strength of the lead wire 6, and the cooperation of the waterproof sealing strip 3 and the waterproof sealing section in the wire accommodating cavity 5 ensures the waterproof performance between the first wire fixing clamp 1 and the second wire fixing clamp 2. The cooperation of the waterproof sealing ring 4 with the first wire fixing clamp 1 and the second wire fixing clamp 2 guarantees the waterproof performance of the first wire fixing clamp 1 and the second wire fixing clamp 2 and the wire outlet 9 of the device. The design of the first overflow groove 106 and the second overflow groove 206 makes the waterproof sealing ring 4 easy to deform and easy to assemble when the protective wire assembly is assembled to the wire outlet 9 of the device. At least one set of the wire buckles 210 is provided on at least one end of the second wire fixing groove 201 of the second wire fixing clamp 2. It is convenient to pre-fix each lead wire 6 in the corresponding wire fixing groove when the lead wire6 is assembled, which is convenient for the buckling assembly of the first wire fixing clamp 1 and the second wire fixing clamp 2.

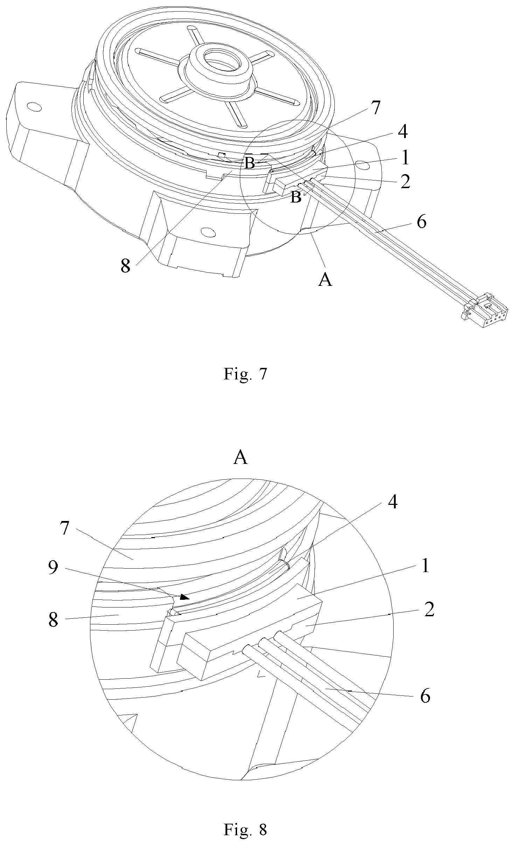

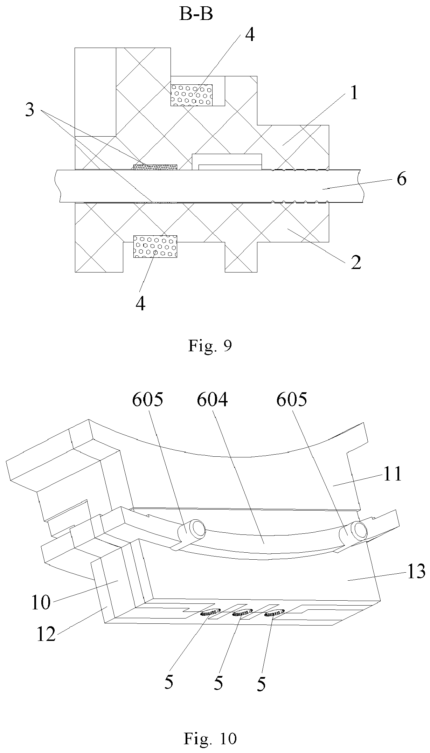

As shown in Figs. 7 and 9, the embodiment of the second aspect of the present invention provides a device with a lead wire, comprising: a housing provided with a wire outlet 9; and the protective wire assembly according to any one of the embodiments of the above-mentioned first aspect, installed at the wire outlet 9.

The present invention has a device with a lead wire provided by the above-mentioned embodiment, because it comprises the protective wire assembly of any one of the embodiments of the above-mentioned first aspect, and thus has the beneficial effect of the protective wire assembly of any one of the embodiments of the above-mentioned first aspect.

In an embodiment of the present invention, as shown in Figs. 7 and 8, the housing comprises a first housing 7 and a second housing 8, and a wire outlet 9 is enclosed by the first housing 7 and the second housing 8. The wire outlet 9 of the device with the lead wire is enclosed by two parts housing after assembly, which is convenient for the installation of the protective wire assembly and the lead wire 6. A waterproof sealing is formed between the protective wire assembly and the wire outlet 9, that is, a waterproof sealing is formed between the protective wire assembly and the housing of the device where the wire outlet 9 is provided.

In a specific embodiment, as shown in Figs. 7 and 8, the device with the lead wire comprises a first housing 7 and a second housing 8, the wire outlet 9 is enclosed by the first housing 7 and the second housing 8, and the protective wire assembly is set at the wire outlet 9. As shown in Fig. 9, the protective wire assembly comprises a first wire fixing clamp 1, a second wire fixing clamp 2, a waterproof sealing ring 4 and a second sealing strip. The first wire fixing clamp 1 has a first inner surface 102 facing the second wire fixing clamp 2 and a first peripheral surface 103 facing the first housing 7 and the second housing 8, the first inner surface 102 is provided with a plurality of first wire fixing grooves 101. Correspondingly, the second wire fixing clamp 2 has a second inner surface 202 facing the first wire fixing clamp 1 and a second peripheral surface 203 facing the second housing 8, and the second inner surface 202 is provided with a plurality of second wire fixing grooves 201 matching the first wire fixing grooves 101. The first wire fixing groove 101 and the second wire fixing groove 201 cooperate to form a wire accommodating cavity 5. The outer periphery of the first peripheral surface 103 of the first wire fixing clamp 1 and the second peripheral surface 203 of the second wire fixing clamp 2 are provided with a waterproof sealing ring 4. The waterproof sealing ring 4 is in close contact with the wire outlet 9, the second inner surface 202 of the second wire fixing clamp 2 is provided with a waterproof sealing strip 3, and the waterproof sealing strip 3 is in close contact with the first inner surface 102 of the first wire fixing clamp 1 and the second inner surface 202 of the second wire fixing clamp 2 and the lead wire 6.

In some embodiments, as shown in Figs. 4 to 6, the wire accommodating cavity 5 has a first waterproof sealing section 107, a second waterproof sealing section 207, a first lead wire fastening section 108, and a second lead wire fastening section 208.

In some embodiments, the waterproof sealing section is set in the middle of the wire accommodating cavity 5, and its cross-sectional area is larger than the cross-sectional area of the contained lead wire 6.

In some embodiments, as shown in Fig. 6, the waterproof sealing strip 3 and the waterproof sealing section intersect in the middle of the waterproof sealing section, and the length of the waterproof sealing section along the length direction of the wire accommodating cavity 5 is longer than the cross-sectional width of the sealing strip at the intersection.

In some embodiments, as shown in Fig 4, the first peripheral surface 103 of the first wire fixing clamp 1 is provided with a first peripheral groove 105. As shown in Figs. 5 and 6, the second peripheral surface 203 of the second wire fixing clamp 2 is provided with a second peripheral groove 205, and the waterproof sealing ring 4 is sleeved in the first peripheral groove 105 and the second peripheral groove 205.

In some embodiments, as shown in Figs. 5 and 6, the second inner surface 202 of the second wire fixing clamp 2 is provided with an accommodating groove 204, and the waterproof sealing strip 3 is provided in the accommodating groove 204.

In some embodiments, the material of the waterproof sealing strip 3 is glue, which is set in the accommodating groove by coating.

In some embodiments, as shown in Figs. 4 to 6, the lead wire fastening section is arranged at two ends of the waterproof sealing section, at least one section of the first occlusal section 109 and the second occlusal section 209 are arranged in the wire fastening section, and the inner wall of the occlusal section is provided with a plurality of a first convex teeth 1091, a second convex teeth 2091, the first convex teeth 1091and the second convex teeth 2091 clamp the lead wire 6.

In some embodiments, as shown in Figs. 4 to 6, the occlusal section is set at one end of the lead wire fastening section facing the outside of the device, that is, one end of the device facing the wire outlet direction of the wire outlet 9.

In some embodiments, as shown in Figs. 5 and 6, at least one end of the second wire fixing groove 201 of the second wire fixing clamp 2 is provided with at least one set of wire buckles 210. Correspondingly, as shown in Fig. 4, the first inner surface 102 of the first wire fixing clamp 1 is provided with a wire buckle accommodating cavity 110 for accommodating the wire buckle 210, the wire buckle 210 buckles with the contained lead wire 6.

In some embodiments, as shown in Fig. 4, the first inner surface 102 of the first wire fixing clamp 1 is provided with a first positioning hole 112 and a first positioning post 111, Correspondingly, as shown in Figs. 5 and 6, the second inner surface 202 of the second wire fixing clamp 2 is provided with a second positioning hole 212 and a second positioning post 211 that are paired with the first positioning hole 112 and the first positioning post 111. The first positioning post 111 and the second positioning post 211 are inserted into the second positioning hole 212 and the first positioning hole 112.

In some embodiments, as shown in Fig. 4, the edge of the first peripheral groove 105 is adjacently provided with a first overflow groove 106, as shown in Figs.5 and 6, the edge of the second peripheral groove 205 is adjacently provided with a second overflow groove 206.

In some embodiments, the material of the first wire fixing clamp 1 and the second wire fixing clamp 2 is nylon or PBT (polybutylene terephthalate) material.

In some embodiments, the material of the waterproof sealing ring 4 is rubber.

In some embodiments, the first wire fixing clamp 1 and the second wire fixing clamp 2 are connected by a connecting portion on one side, and the first wire fixing clamp 1, the second wire fixing clamp 2 and the connecting portion are an integral injection molding structure.

Specifically, the device with the lead wire is a motor.

Of course, the device with the lead wire is not limited to a motor, but can also be other devices with lead wire, as long as it does not deviate from the design concept of the present invention, it should be within the protection scope of the present invention.

In summary, the protective wire assembly provided by the embodiment of the present invention structurally comprises at least two wire fixing clamps (the first wire fixing clamp and the second wire fixing clamp), a waterproof sealing ring and a waterproof sealing strip. The wire fixing clamp and the waterproof sealing ring are made of different materials, and the wire fixing clamp and the waterproof sealing strip are made of different materials. It can realize that the contact part of the sheath assembly and the housing of the device is provided with a waterproof sealing ring, and the two wire fixing clamps (i.e., one surface of the wire fixing clamp opposite to the other wire fixing clamp) are provided with a waterproof sealing strip. The two wire fixing clamps themselves can fasten and fix the lead wire as well as the wire fixing clamp and the device housing. The waterproof sealing ring and the waterproof sealing strip can achieve a good waterproof performance. There is a wire accommodating cavity between the two wire fixing clamps. The wire accommodating cavity has a waterproof sealing section and a lead wire fastening section, which are used for waterproof and wire fixing respectively. Wherein the lead wire fastening section can be set with an occlusal section, and the occlusal section can be set with a convex teeth structure. The purpose is to enhance the ability of the wire fixing clamp to fix the lead wire. The wire fixing clamp with the waterproof sealing strip is provided with an accommodating groove for setting the waterproof sealing strip. The best embodiment for the waterproof sealing strip is glue. When the lead wire is inserted into the wire fixing groove, the glue can be conveniently wrapped around the lead wire to form a seal. When the two wire fixing clamps are buckled and assembled, the glue can also form a good waterproof sealing between the two wire fixing clamps. At least one set of the wire buckles is provided around each wire fixing groove on the wire fixing clamp with a waterproof sealing strip. In this way, it is more convenient when the lead wire is inserted into the wire fixing groove of the wire fixing clamp assembly that has been sleeved with a waterproof sealing ring. Both wire fixing clamps are provided with grooves on the surfaces facing the device housing to facilitate the assembly of the waterproof sealing ring, so that the waterproof sealing ring can be conveniently set at the position where the waterproof sealing is required. An overflow groove can also be set around the groove used to assemble the waterproof sealing ring, so that when the protective wire assembly that has been assembled with the waterproof sealing ring is installed in the housing wire outlet of the device, the waterproof sealing ring in contact with the housing is easily deformed, which is convenient for assembly. There are several buckling parts on the two wire fixing clamps to facilitate the assembly of the two wire fixing clamps. There can also be an integral injection molding connecting portion between the two wire fixing clamps, and it is integral injection molding. The wire fixing clamp material is optionally nylon or PBT etc., the material of the waterproof sealing ring is optionally rubber, and the material of the waterproof sealing strip is optionally glue.

As shown in Figs. 10 to 19, some embodiments of the third aspect of the present invention provide a protective wire assembly, used in a device with a lead wire and installed at the wire outlet 9 of the device, and the protective wire assembly comprises: a first wire clamp 10, a second wire clamp 11, a first wire holder 12 and a second wire holder 13.

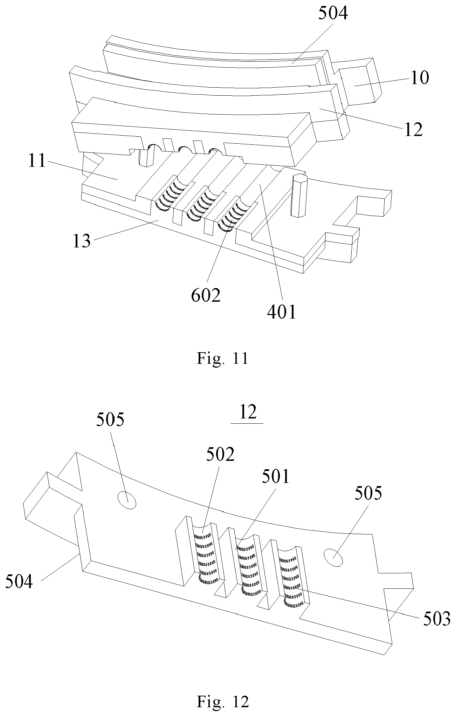

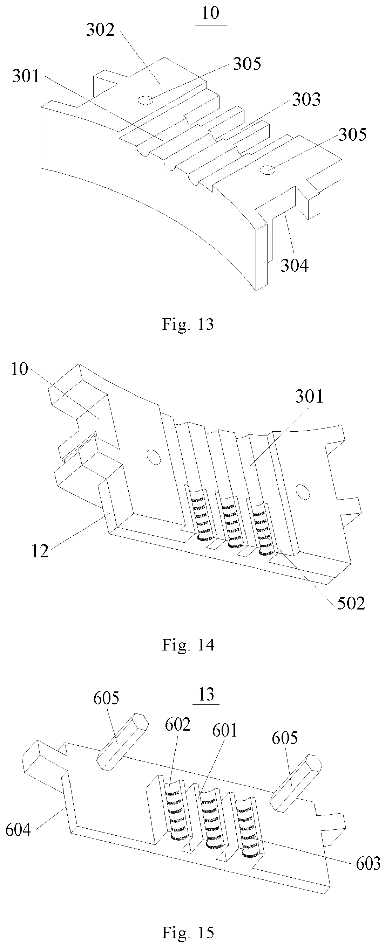

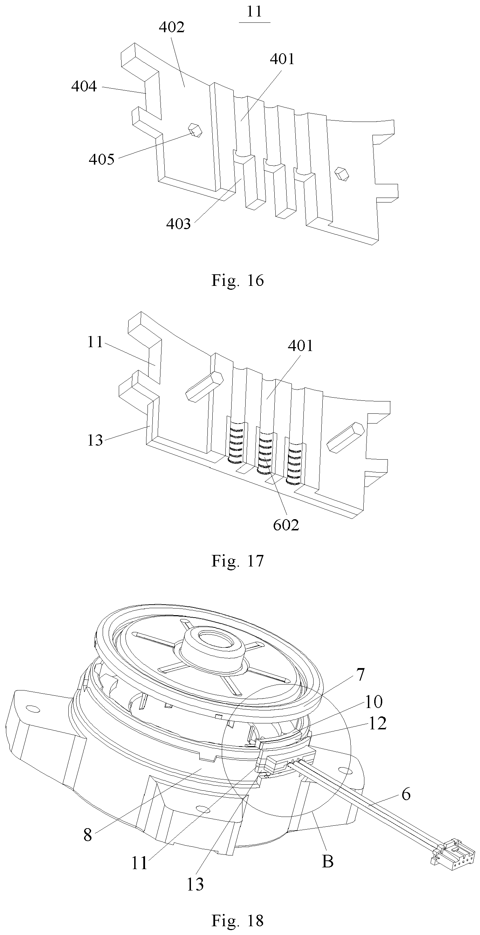

Specifically, as shown in Figs. 13 and 14, a first wire clamp 10 is provided with a plurality of first wire grooves 301; as shown in Figs. 16 and 17, a second wire clamp 11 is provided with a second wire groove 401 corresponding to the first wire groove 301, as shown in Figs. 10 and 11, the first wire clamp 10 and the second wire clamp 11 assembled in a fitting manner, the first wire groove 301 and the second wire groove 401 jointly form a wire accommodating cavity 5 for accommodating the lead wire 6, the outer circumference of the lead wire 6 can contact and seal the first wire groove 301 and the second wire groove 401, and an assembly formed by the first wire clamp 10 and the second wire clamp 11 can contact and seal the peripheral wall of the wire outlet 9, as shown in Figs. 12 and 14, a first wire holder 12 installed on the first wire clamp 10, a hardness of the first wire holder 12 is higher than that of the first wire clamp 10, as shown in Figs. 15 and 17, a second wire holder 13 installed on the second wire clamp 11, and a hardness of the second wire holder 13 is higher than that of the second wire clamp 11, and the lead wire 6 can be crimped and fixed by the first wire holder 12 and the second wire holder 13.

According to the protective wire assembly provided by the above-mentioned embodiment of the present invention, the first wire clamp 10 and the second wire clamp 11 can realize the guiding and waterproof sealing of the lead wire 6, and the waterproof sealing between the protective wire assembly and the peripheral wall of the wire outlet 9 of the device, so as to play a very good waterproof sealing role, the first wire holder 12 and the second wire holder 13 can achieve a good fastening of the lead wire 6, thereby playing a very good role in fixing the lead wire 6, and thus the protective wire assembly of this solution has an excellent waterproof performance while ensuring the tensile strength of the lead wire 6. It can simultaneously solve the technical problems of the poor waterproof performance of the hard plastic protective wire sheath and the small fastening force of the soft rubber protective wire sheath to the lead wire 6 in the prior art, resulting in the low tensile strength of the lead wire 6. Moreover, the structure is simple, the assembly is convenient, and the cost is low.

In an embodiment of the present invention, as shown in Fig. 12 and 14, the first wire clamp 10 has a first mating surface 302 that is attached the second wire clamp 11, the first wire groove 301 is provided on the first mating surface 302, and the first wire clamp 10 is provided with a first avoiding hole 303 that penetrates the first mating surface 302, the first wire holder 12 is fully or partially inserted into the first avoiding hole 303, and the first wire holder 12 is provided with a third wire fixing groove 502 arranged along a length direction of the first wire groove 301, as shown in Figs. 15 to 17, the second wire clamp 11 has a second mating surface 402 that is attached to the first wire clamp 10, the second wire groove 401 is provided on the second mating surface 402, and the second wire clamp 11 is provided with a second avoiding hole 403 that penetrates the second mating surface 402, the second wire holder 13 is fully or partially inserted into the second avoiding hole 403, and the second wire holder 13 is provided with a fourth wire fixing groove 602 arranged along a length direction of the second wire groove 401, as shown in Figs. 10 and 11, the third wire fixing groove 502 and the fourth wire fixing groove 602 jointly fix the lead wire 6.

By setting the first avoiding hole 303, the first wire holder 12 can be fully or partially inserted into the inner side of the first wire clamp 10, and by setting the second avoiding hole 403, the second wire holder 13 can be fully or partially inserted into the inner side of the second wire clamp 11, so that the third wire fixing groove 502 set on the first wire holder 12 and the fourth wire fixing groove 602 set on the second wire holder 13 can fix the lead wire 6 together to ensure that the lead wire 6 has strong tensile strength.

In an embodiment of the present invention, as shown in Figs. 12 to 14, the number of the first avoiding holes 303 is equal to the number of the first wire grooves 301, and are arranged along the length direction of the first wire groove 301, and the first wire holder 12 is provided with a first wire fixing teeth 501 equal to the number of the first avoiding holes 303, the first wire fixing teeth 501 are correspondingly inserted into the first avoiding holes 303, and each of the first wire fixing teeth 501 is provided with a third wire fixing groove 502, as shown in Figs. 15 to 17, the number of the second avoiding holes 403 is equal to the number of the second wire grooves 401, and are arranged along the length direction of the second wire groove 401, and the second wire holder 13 is provided with a second wire fixing teeth 601 equal to the number of the second avoiding holes 403, the second wire fixing teeth 601 are correspondingly inserted into the second avoiding holes 403, each of the second wire fixing teeth 601 is provided with one fourth wire fixing groove 602, and the corresponding third wire fixing groove 502 and the fourth wire fixing groove 602 jointly fix the lead wire 6.

By using the first wire groove 301 and the second wire groove 401, the outer circumference of the lead wire 6 is closely attached to the first wire groove 301 and the second wire groove 401, so as to realize the guidance and the waterproof sealing of the lead wire 6. By using the third wire fixing groove 502 and the fourth wire fixing groove 602 to realize the third wire fixing groove 502 and the fourth wire fixing groove 602 to fix the lead wire 6 together, so as to achieve a good fastening effect on the lead wire 6. The first wire fixing teeth 501 and the first avoiding holes 303 are set correspondingly, which can form an alternate insertion structure between the first wire holder 12 and the first wire clamp 10. The first wire fixing teeth 501 is inserted into the first avoiding hole 303, and the ribs formed between two adjacent first avoiding holes 303 are inserted into the gap between the two adjacent first wire fixing teeth 501, which is beneficial to improve the structure strength of the first wire holder 12 and the first wire clamp 10 after assembly. Similarly, the second wire fixing teeth 601 and second avoiding holes 403 are set correspondingly, which is beneficial to improve the structural strength of the second wire holder 13 and second wire clamp 11 after assembly. Of course, it is also possible to design a plurality of first avoiding holes 303 into larger size avoiding holes, that is, remove the ribs between two adjacent first avoiding holes 303, and design a plurality of first wire fixing teeth 501 into a larger size boss, and design a plurality of third wire fixing groove 502 on the boss, the boss is inserted into the avoiding hole. Similarly, the third wire fixing groove 502 and the fourth wire fixing groove 602 can be used to achieve the fastening of the lead wire 6.

In an embodiment of the present invention, as shown in Figs. 12 and 15, a groove wall of the third wire fixing groove 502 is provided with a plurality of third convex teeth 503 for clamping the lead wire 6, and a groove wall of the fourth wire fixing groove 602 is provided with a plurality of fourth convex teeth 603 for clamping the lead wire 6. The setting of the third convex teeth 503 and the fourth convex teeth 603 enhances the fixing ability of the first wire holder 12 and the second wire holder 13 to the lead wire 6, and strengthens the tensile strength of the lead wire 6.

In an embodiment of the present invention, as shown in Fig. 13, the first wire clamp 10 has a first sealing surface 304 for contact with the peripheral wall of the wire outlet 9, as shown in Fig. 16, the second wire clamp 11 has a second sealing surface 404 for contact with the peripheral wall of the wire outlet 9, the first sealing surface 304 and the second sealing surface 404 jointly realize the contact sealing between the protective wire assembly and the peripheral wall of the wire outlet 9, so that play a good waterproof sealing role.

In an embodiment of the present invention, as shown in Fig. 12, the first wire holder 12 has a first abutment part 504 for contact with the peripheral wall of the wire outlet 9, as shown in Fig. 15,the second wire holder 13 has a second abutment part 604 for contact with the peripheral wall of the wire outlet 9, the first abutment part 504 and the second abutment part 604 jointly realize the fastening between the protective wire assembly and the peripheral wall of the wire outlet 9. The first abutment part 504 and the second abutment part 604 are used to achieve a good fastening of the protective wire assembly and the wire outlet part of the device, so as to ensure that the lead wire 6 has a strong tensile strength.

In an embodiment of the present invention, as shown in Figs. 10 and 18, at least either the first abutment part 504 or the second abutment part 604 is provided with a convex portion, and the convex portion is used for inserting into a concave portion provided in the wire outlet portion of the device; or at least either the first abutment part 504 or the second abutment part 604 is provided with a concave portion, and the concave portion is used for inserting the convex portion provided in the wire outlet portion of the device. Through the cooperation of the convex portion and the concave portion, the fastening effect of the protective wire assembly and the wire outlet part of the device can be further ensured.

In an embodiment of the present invention, as shown in Figs. 12 to 17, a third positioning post 605 is provided on one of the first wire holder 12 and the second wire holder 13, a corresponding positioning hole is provided on the other of the first wire holder 12 and the second wire holder 13, as well as on the first wire clamp 10 and the second wire clamp 11, and the third positioning post 605 is inserted into the positioning hole.

In a specific embodiment, as shown in Fig. 15, the second wire holder 13 is provided with a third positioning post 605, as shown in Fig. 12, the first wire holder 12 is provided with a third positioning hole 505 corresponding to the third positioning post 605, as shown in Fig. 13, the first wire clamp 10 is provided with a fourth positioning hole 305 corresponding to the third positioning post 605, as shown in Fig. 16, the second wire clamp 11 is provided with a fifth positioning hole 405 corresponding to the third positioning post 605.

By using the cooperation of the third positioning post 605 and the positioning hole, the positioning and assembly of the first wire holder 12, the second wire holder 13, the first wire clamp 10 and the second wire clamp 11 are realized, and the structure is simple and the assembly is convenient.

In an embodiment of the present invention, the first wire clamp 10 and the second wire clamp 11 are connected by a connecting portion on one side, and the first wire clamp 10, the second wire clamp 11, and the connecting portion are an integral injection molding structure. The first wire clamp 10 and the second wire clamp 11 adopt an integral injection molding structure, which makes the processing convenient, the connection strength is high, and the assembly of the entire protective wire assembly is more convenient.

In some embodiments, the first wire clamp 10 is provided with a plurality of first buckling parts, the second wire clamp 11 is provided with a second buckling part corresponding to the first buckling part, and the first buckling part and the second buckling part are buckled and connected to make the first wire clamp 10 is fixed on the second wire clamp 11. The first wire clamp 10 and the second wire clamp 11 can also be processed separately, and then use the cooperation of the first buckling part and the second buckling part to assemble the first wire clamp 10 and the second wire clamp 11 together, which makes the processing of the two convenient and the assembly operation simple.

In an embodiment of the present invention, the first wire clamp 10 and the second wire clamp 11 are both wire clamps of rubber material, the first wire holder 12 and the second wire holder 13 are both wire holders of plastic material.

The first wire clamp10 and the second wire clampll use rubber material to ensure that the protective wire assembly has a good waterproof sealing performance, and the first wire holder 12 and the second wire holder 13 use plastic material to ensure that the protective wire assembly has a strong fastening force to the lead wire 6, and ensure that the lead wire 6 has strong tensile strength. Of course, the materials of the first wire clamp 10 and the second wire clamp 11 are not limited to the above specific limitations, and the materials of the first wire holder 12 and the second wire holder 13 are not limited to the above specific limitations, but the first wire clamp 10 and the second wire clamp 11, and the first wire holder 12 and the second wire holder 13 use different materials, and the hardness of the wire clamp is less than that of the wire holder.

In a specific embodiment, the first wire holder 12 and the second wire holder 13 are both nylon material or PBT (polybutylene terephthalate) wire holders. The first wire holder 12 and the second wire holder 13 optionally use hard plastic material such as nylon material or PBT (polybutylene terephthalate) material to ensure the protective wire assembly has a strong fastening force to the lead wire 6, and ensure that the lead wire 6 has a strong tensile strength. Of course, the materials of the first wire holder 12 and the second wire holder 13 are not limited to the above specific limitations.

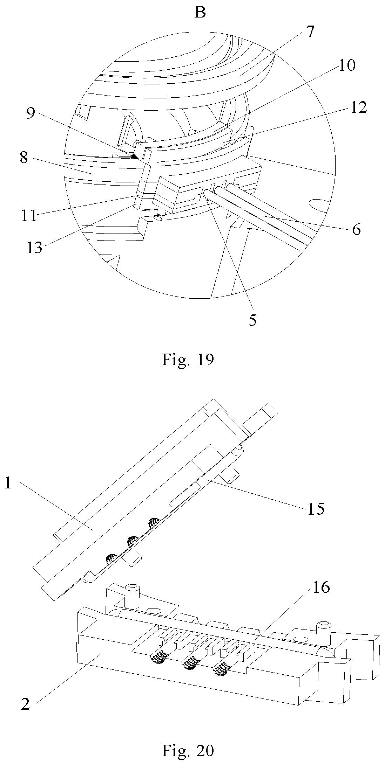

As shown in Figs. 18 and 19, the embodiment of the fourth aspect of the present invention provides a device with a lead wire, comprising: a housing provided with a wire outlet 9; and the protective wire assembly of any one of the embodiments of above-mentioned third aspect, installed at the wire outlet 9.

The present invention has a device with a lead wire provided by the above-mentioned embodiment, because it comprises the protective wire assembly of any one of the embodiments of the above-mentioned third aspect, and thus has the beneficial effect of the protective wire assembly of any one of the embodiments of the above-mentioned third aspect.

In an embodiment of the present invention, as shown in Figs. 18 and 19, the housing comprises a first housing 7 and a second housing 8, and a wire outlet 9 is enclosed by the first housing 7 and the second housing 8. The wire outlet 9 of the device with the lead wire is enclosed by two parts housing after assembly, that is, the first housing 7 and the second housing 8 jointly form the peripheral wall of the wire outlet 9. It is convenient to install the protective wire assembly and the lead wire6. The assembly formed by the first wire clamp 10 and the second wire clamp 11 is in contact with the peripheral wall of the wire outlet 9, that is, the assembly formed by the first wire clamp 10 and the second wire clamp 11 is in contact and sealed with the housing of the device where the wire outlet 9 is provided.

In a specific embodiment, as shown in Figs. 18 and 19, the device with the lead wire comprises a first housing 7 and a second housing 8, the wire outlet 9 is enclosed by the first housing 7 and the second housing 8, and the protective wire assembly is set at the wire outlet 9. As shown in Figs. 10 and 11, the protective wire assembly comprises a first wire clamp 10, a second wire clamp 11, a first wire holder 12 and a second wire holder 13. As shown in Figs. 13 and 14, the first wire clamp 10 has a first mating surface 302 that is attached to the second wire clamp 11 and a first sealing surface 304 that contacted to the first housing 7 and the second housing 8, and the first mating surface 302 is provided with a plurality of first wire grooves 301. Correspondingly, as shown in Figs. 16 and 17, the second wire clamp 11 has a second mating surface 402 that is attached to the first wire clamp 10 and a second sealing surface 404 that is in contact with the second housing 8. The second mating surface 402 is provided with a plurality of second wire grooves 401 matching the first wire grooves 301. The materials of the first wire clamp 10 and the second wire clamp 11 are easy to deform. The materials of the first wire holderl2 and second wire holder13 are materials that are not easily deformed. The first mating surface 302 and the second mating surface 402 are closely attached, and the first sealing surface 304 and the second sealing surface 404 are closely attached to the first housing 7 and the second housing 8. The first wire groove 301 and the second wire groove 401 form the wire accommodating cavity 5, the lead wire 6 is set in the wire accommodating cavity 5, and the outer circumference of the lead wire 6 is closely attached by the first wire groove 301 and the second wire groove 401. As shown in Figs. 12 and 14, the first wire holder 12 is provided in the first wire clamp 10, as shown in Figs. 15 and 17, the second wire holder 13 is provided in the second wire clamp 11, and the lead wire 6 is crimped and fixed by the first wire holder 12 and the second wire holder 13.

In some embodiments, as shown in Figs. 12 to 14, the first wire clamp 10 is provided with a plurality of first avoiding holes 303, and the first wire holder 12 is fully or partially inserted into the first avoiding hole 303. As shown in Figs. 15 to 17, the second wire clamp 11 is provided with a plurality of second avoiding holes 403, the second wire holder 13 is fully or partially inserted into the second avoiding hole 403.

In some embodiments, as shown in FIG. 12, the first wire holder 12 has a first abutment part 504 in contact with the first housing 7 and a plurality of first wire fixing teeth 501, and the end of the first wire fixing teeth 501 is provided with a third wire fixing groove 502. As shown in FIG. 15, the second wire holder 13 has a second abutment part 604 in contact with the second housing 8 and a plurality of second wire fixing teeth 601. The end of the second wire fixing teeth 601 is provided with a fourth wire fixing groove 602. The lead wire 6 is fixedly arranged in the third wire fixing groove 502 and the fourth wire fixing groove 602, the first abutment part 504 is abutted and connected to the first housing 7, and the second abutment part 604 is abutted and connected to the second housing 8.

In some embodiments, As shown in Figs. 15 and 18, the second housing 8 is provided with a concave portion (or convex portion), the second abutment part 604 is provided with a corresponding convex portion (or concave portion); or the second housing 8 is provided with a concave portion (or convex portion), the first abutment part 504 is provided with a corresponding convex portion (or concave portion).

In some embodiments, as shown in Fig. 12, the third wire fixing groove 502 is provided with a plurality of third convex teeth 503, and as shown in Fig. 15, the fourth wire fixing groove 602 is provided with a plurality of fourth convex teeth 603.

In some embodiments, as shown in Fig. 12, the first wire holder 12 is provided with a plurality of positioning holes (or positioning posts). Correspondingly, as shown in Fig. 15, the second wire holder 13 is provided with a plurality of third positioning posts 605 (or positioning holes) matching with the positioning holes (or positioning posts), the third positioning post 605 is inserted into the positioning hole.

In some embodiments, the wire accommodating cavity 5 has a waterproof sealing section and a lead wire fastening section. The first avoiding hole 303 and the wire accommodating cavity 5 intersect vertically in the lead wire fastening section. The second avoiding hole 403 and the wire accommodating cavity 5 intersect vertically in the lead wire fastening section. It can also be understood that the first wire groove 301 and the second wire groove 401 cooperate to form a waterproof sealing section, and the third wire fixing groove 502 and the fourth wire fixing groove 602 cooperate to form a lead wire fastening section.

In some embodiments, the materials of the first wire clamp 10 and the second wire clamp 11 are rubber material, and the materials of the first wire holder 12 and the second wire holder 13 are hard plastic material. In a specific embodiment, the materials of the first wire holder 12 and the second wire holder 13 are PBT (polybutylene terephthalate) material or nylon material, and injection molding.

In some embodiments, the first wire clamp 10 and the second wire clamp 11 are connected by a connecting portion on one side, and the first wire clamp 10, the second wire clamp 11 and the connecting portion are integrally injection molded.

Specifically, the device with the lead wire is a motor.

Of course, the device with the lead wire is not limited to a motor, but can also be other devices with lead wire, as long as it does not deviate from the design concept of the present invention, it should be within the protection scope of the present invention.

In summary, the protective wire assembly provided by the embodiment of the present invention structurally comprises at least two wire clamps (i.e., the first wire clamp and the second wire clamp) and two wire holders (i.e., the first wire holder and the second wire holder). The wire clamp is in contact with the housing, and the wire holder is in contact with the housing, so that two wire clamps can realize the guiding and waterproof sealing of the lead wire, as well as the waterproof sealing of the protective wire assembly and the housing of the device. Two wire holders can achieve a good fastening of the lead wire, and a good fastening of the protective wire assembly and the housing of the device. The protective wire assembly comprises at least two parts of different materials. The hardness of the wire clamp is lower than that of the wire holder. The material of the wire clamp is a material that is easy to deform, and the material of the wire holder is a material that is not easy to deform. The two wire clamps are respectively provided with a plurality of insertion holes (or avoiding holes). The two wire holders are inserted separately or partially into the corresponding wire clamps, the structure is simple, and the assembly is convenient. The wire holder has wire fixing teeth, the wire fixing teeth has wire fixing groove, and the wire fixing groove can be provided with convex teeth. The purpose is to enhance the fastening force to the lead wire. The two wire clamps have a plurality of buckling parts respectively, which is convenient for the assembly of the two wire clamps, the material of the wire holder is optionally nylon or PBT, and the material of the wire clamp is optionally a rubber material.

As shown in Figs. 20 to 28, some embodiments of the fifth aspect of the present invention provide a protective wire assembly, used in a device with a lead wire and installed at the wire outlet 9 of the device, and the protective wire assembly comprises: a first wire fixing clamp 1, a second wire fixing clamp 2, a first seal ring 15 and a second seal ring 16.

Specifically, as shown in Figs. 20, 21 and 24, a first wire fixing clamp 1 is provided with a plurality of first wire fixing grooves 101; a second wire fixing clamp 2 is provided with a second wire fixing groove 201 corresponding to the first wire fixing groove 101, and the first wire fixing groove 101 and the second wire fixing groove 201 cooperate to form a wire accommodating cavity 5 for fixing the lead wire 6; a first seal ring 15 is sleeved on an outer peripheral surface of the first wire fixing clamp 1; and a second seal ring 16 is sleeved on an outer peripheral surface of the second wire fixing clamp 2, and the first seal ring 15 and the second seal ring 16 jointly form a first sealing structure for contacting and sealing with a peripheral wall of the wire outlet 9 on an outer peripheral surface of the protective wire assembly, and the first seal ring 15 and the second seal ring 16 jointly form a second sealing structure between the first wire fixing clamp 1 and the second wire fixing clamp 2.

It should be understood that the first wire fixing clamp 1 and the second wire fixing clamp 2 are mainly used to fix the lead wire 6. the first seal ring 15 and the second seal ring 16 are mainly used for waterproof sealing. Based on their respective functions, the first wire fixing clamp 1 and the second wire fixing clamp 2, and the first seal ring 15 and the second seal ring 16 can be made of different materials, such as the first wire fixing clamp 1 and the second wire fixing clamp 2 use plastic material, and the first seal ring 15 and the second seal ring 16 use rubber material. Of course, the specific material is not limited to the above-mentioned specific limitations, and those skilled in the art can choose reasonably according to actual needs.

According to the protective wire assembly provided by the above-mentioned embodiment of the present invention, the first seal ring 15 and the second seal ring 16 are respectively arranged on the outer peripheral surfaces of the first wire fixing clamp 1 and the second wire fixing clamp 2. The cooperation of the first seal ring 15 and the second seal ring 16 is able to not only realize the waterproof sealing between the protective wire assembly and the wire outlet 9 of the device, but also ensure that the waterproof sealing is formed between the two wire fixing clamps, thus playing a very good waterproof sealing effect. The first wire fixing clamp 1 and the second wire fixing clamp 2 cooperate to form a wire accommodating cavity for fixing the lead wire 6, which plays a very good role in fixing the lead wire 6, so that the protective wire assembly of this solution has an excellent waterproof performance while ensuring the tensile strength of the lead wire 6. It can simultaneously solve the technical problems of the poor waterproof performance of the hard plastic protective wire sheath and the small fastening force of the soft rubber protective wire sheath to the lead wire 6 in the prior art, resulting in the low tensile strength of the lead wire 6. Moreover, the structure is simple, the assembly is convenient, and the cost is low.

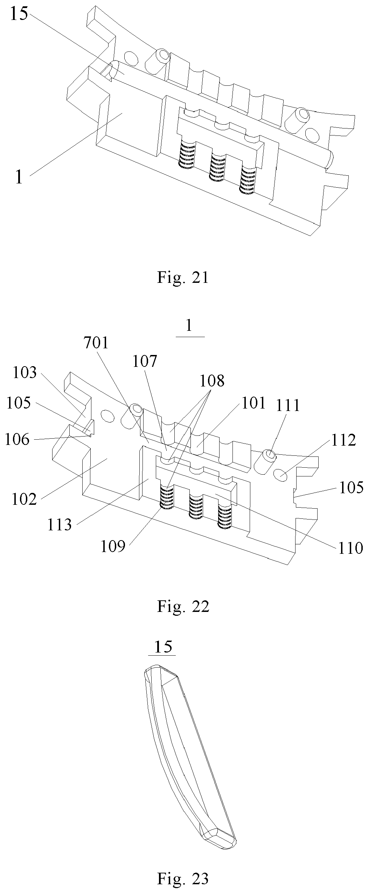

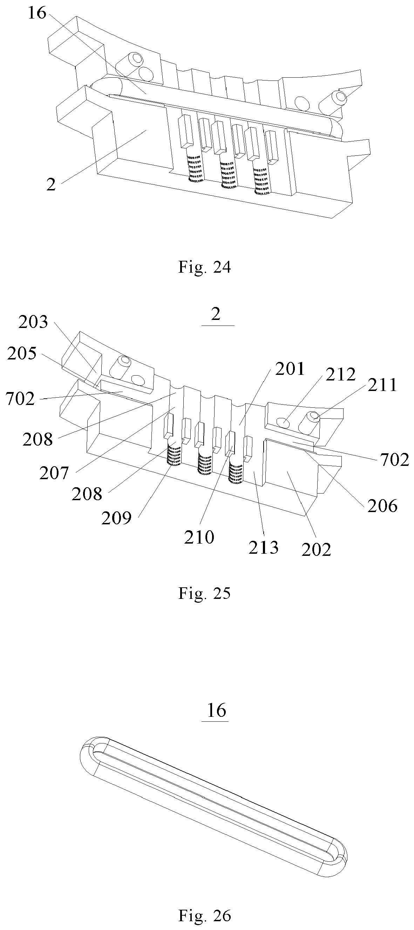

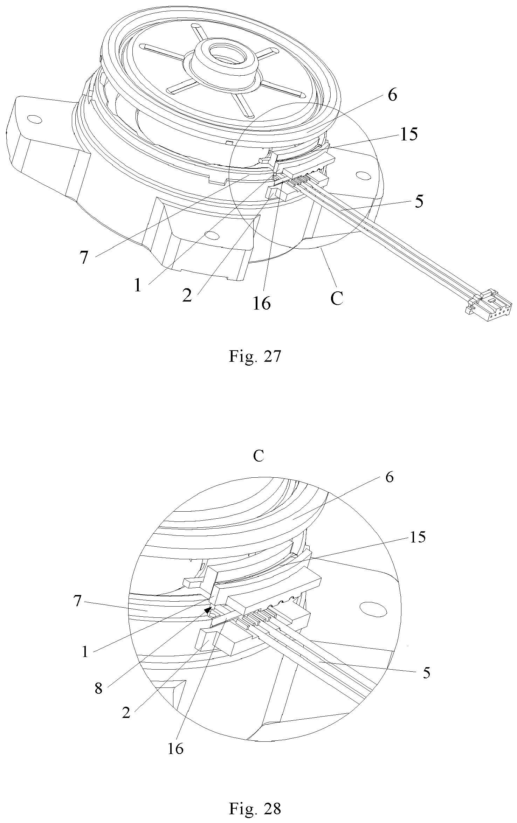

In an embodiment of the present invention, as shown in Fig. 22, the first wire fixing clamp 1 has a first inner surface 102 facing the second wire fixing clamp 2 and a first peripheral surface 103 facing a peripheral wall of the wire outlet 9, the first wire fixing groove 101 is provided on the first inner surface 102, as shown in Figs. 21 and 23, the first seal ring 15 is sleeved on an outer peripheral surface formed by the first inner surface 102 and the first peripheral surface 103, and intersects with the first wire fixing groove 101, as shown in Fig. 25, the second wire fixing clamp 2 has a second inner surface 202 facing the first wire fixing clamp 1 and a second peripheral surface 203 facing a peripheral wall of the wire outlet 9, the second wire fixing groove 201 is provided on the second inner surface 202, as shown in Figs. 24 and 26, and the second seal ring 16 is sleeved on an outer peripheral surface formed by the second inner surface 202 and the second peripheral surface 203, and intersects with the second wire fixing groove 201, as shown in Figs. 27 and 28, a portion of the first seal ring 15 located on the first peripheral surface 103 and a portion of the second seal ring 16 located on the second peripheral surface 203 jointly form the first sealing structure, and a portion of the first seal ring 15 located on the first inner surface 102and a portion of the second seal ring 16 located on the second inner surface 202 jointly form the second sealing structure.

It can be understood that the first peripheral surface 103 of the first wire fixing clamp 1 facing the peripheral wall of the wire outlet 9, that is, the surface that the first wire fixing clamp 1 is used to contact and cooperate with the peripheral wall of the wire outlet 9, the first peripheral surface 103 is not limited to one surface, but may also comprise a plurality of surfaces. Similarly, the second peripheral surface 203 of the second wire fixing clamp 2 facing the peripheral wall of the wire outlet 9, that is, the surface that the second wire fixing clamp 2 is used to contact and cooperate with the peripheral wall of the wire outlet 9, the second peripheral surface 203 is not limited to one surface, but may also comprise a plurality of surfaces. The first peripheral surface 103 and the second peripheral surface 203 jointly constitute the outer peripheral surface of the protective wire assembly. The part of the first seal ring 15 located on the first peripheral surface 103 and the part of the second seal ring 16 located on the second peripheral surface 203 jointly form a first sealing structure, that is, the part of the first seal ring 15 located on the first peripheral surface 103 is in close contact with the wire outlet 9. The part of the second seal ring 16 located on the second peripheral surface 203 is in close contact with the wire outlet 9, so as to achieve the waterproof sealing between the outer peripheral surface of the protective wire assembly and the peripheral wall of the wire outlet 9. The part of the first seal ring 15 located on the first inner surface 102 and the part of the second seal ring 16 located on the second inner surface 202 jointly form a second sealing structure, so as to realize the waterproof sealing between the first wire fixing clamp 1 and the second wire fixing clamp 2, and the lead wire 6 and the protective wire assembly, thereby ensuring a good waterproof sealing effect.

In an embodiment of the present invention, as shown in Fig. 22, the first inner surface 102 is provided with a first inner groove 701, the first peripheral surface 103 is provided with a first peripheral groove 105, and the first seal ring 15 is accommodated in the first inner groove 701 and the first peripheral groove 105. As shown in Fig. 25, the second inner surface 202 is provided with a second inner groove 702, the second peripheral surface 203 is provided with a second peripheral groove 205, and the second seal ring 16 is accommodated in the second inner groove 702 and the second peripheral groove 205. The above-mentioned groove is set to facilitate the assembly of the first seal ring 15 on the first wire fixing clamp 1 and the assembly of the second seal ring 16 on the second wire fixing clamp 2.

In an embodiment of the present invention, at least either an edge of the first inner groove 701 or an edge of the first peripheral groove 105 is adjacently provided with a first overflow groove 106. It can also be understood that at least either the groove width of the first inner groove 701 or the groove width of the first peripheral groove 105 near the notch is greater than the groove width near the bottom of the groove, and a step is formed between the groove wall near the notch and the groove wall near the bottom of the groove, and make at least one side of the first inner groove 701 and the first peripheral groove 105 a stepped wall. The part of the groove that is close to the notch and relatively close to the bottom of the groove where the groove width becomes wider can be understood as the above-mentioned first overflow groove 106. At least either an edge of the second inner groove 702 or an edge of the second peripheral groove 205 is adjacently provided with a second overflow groove 206, and the second overflow groove 206 can refer to the above-mentioned first overflow groove 106 for the same understanding, and will not be repeated here.

The design of the first overflow groove 106 and the second overflow groove 206 makes it easier to deform the first seal ring 15 and the second seal ring 16 when the first wire fixing clamp 1 with the first seal ring 15 and the second wire fixing clamp 2 with the second seal ring 16 are assembled. This makes assembly easy, and ensures the waterproof sealing effect. It is also convenient for the protective wire assembly to be assembled to the wire outlet 9 of the device with the lead wire, the first seal ring 15 and the second seal ring 16 are more easily deformed, which is convenient for assembly, and ensures the waterproof sealing effect. The first overflow groove 106 and the second overflow groove 206 can be designed at the same time as needed. It is also possible to design only one of the first overflow groove 106 and the second overflow groove 206.

In an embodiment of the present invention, as shown in Fig. 22, the first inner surface 102 is provided with a boss 113, the first wire fixing groove 101 is provided on the boss 113, as shown in Fig. 25, the second inner surface 202 is provided with a groove 213, the second wire fixing groove 201 is provided on a bottom wall of the groove 213, and the first wire fixing clamp 1 is buckled with the second wire fixing clamp 2, the boss 113 is installed in the groove 213.

In some embodiments, the second inner surface 202 is provided with a boss 113, the second wire fixing groove 201 is provided on the boss 113, the first inner surface 102 is provided with a groove 213, the first wire fixing groove 101 is provided on a bottom wall of the groove 213, and the first wire fixing clamp 1 is buckled with the second wire fixing clamp 2, and the boss 113 is installed in the groove 213.

By using the cooperation of the boss 113 and the groove 213, not only realizes the positioning and assembly of the first wire fixing clamp and the second wire fixing clamp 2, but also makes the connection strength between the two higher.

In some embodiments of the present invention, as shown in Figs. 22 and 25, the wire accommodating cavity 5 comprises a waterproof sealing section and a lead wire fastening section, the first seal ring 15 and the second seal ring 16 both intersect with the waterproof sealing section, and the lead wire fastening section is used for fixing the lead wire 6. The lead wire fastening section is used to fasten the lead wire 6, the first seal ring 15 and the second seal ring 16 cooperate with the waterproof sealing section to provide an excellent waterproof sealing performance.

In a specific embodiment, as shown in Figs. 22 and 25, the wire accommodating cavity 5 comprises a waterproof sealing section and a lead wire fastening section set at two ends of the waterproof sealing ring, that is, a lead wire fastening section is set at two ends of the waterproof sealing section. Wherein the waterproof sealing section comprises a first waterproof sealing section 107 located on the first wire fixing clamp 1 and a second waterproof sealing section 207 located on the second wire fixing clamp 2, and the fastening section of the lead wire 6 comprises a first lead wire fastening section 108 located on the first wire fixing clamp 1 and a second lead wire fastening section 208 located on the second wire fixing clamp 2.

In an embodiment of the present invention, as shown in Figs. 22 and 25, the lead wire fastening section is provided with at least one occlusal section, and an inner wall of the occlusal section is provided with a plurality of convex teeth for clamping the lead wire 6. The setting of the occlusal section enhances the fixing ability of the first wire fixing clamp 1 and the second wire fixing clamp 2 to the lead wire 6, and strengthens the tensile strength of the lead wire 6. In a specific embodiment, the lead wire fastening section comprises a first lead wire fastening section 108 located on the first wire fixing clamp 1 and a second lead wire fastening section 208 located on the second wire fixing clamp 2. The first lead wire fastening section 108 is provided with at least one first occlusal section 109, and the inner wall of the first occlusal section 109 is provided with a plurality of first convex teeth for clamping the lead wire 6. The second lead wire fastening section 208 is provided with at least one second occlusal section 209, and the inner wall of the second occlusal section 209 is provided with a plurality of second convex teeth for clamping the lead wire 6, that is, the occlusal section comprises the first occlusal section 109 and the second occlusal section 209.

In a specific embodiment, as shown in Figs. 22 and 25, the occlusal section is set at one end of the lead wire fastening section facing the wire outlet direction of the wire outlet 9. Of course, the setting position of the occlusal section in the lead wire fastening section is not limited to the above specific limitations, and the occlusal section can also be set on other locations within the lead wire fastening section as needed, without departing from the design concept of the present invention.

In an embodiment of the present invention, the waterproof sealing section is set in a middle of the length direction of the wire accommodating cavity 5, and a cross-sectional area of the waterproof sealing section is larger than the cross-sectional area of the contained lead wire 6.

It should be understood that the waterproof sealing section is set in the middle of the length direction of the wire accommodating cavity 5, and the middle here is only relative to the end of the wire accommodating cavity, and is not used to limit the specific setting position of the waterproof sealing section in the length direction of the wire accommodating cavity. The cross-sectional area of the waterproof sealing section is designed to be larger than the cross-sectional area of the contained lead wire 6, so that the waterproof sealing section and the contained lead wire 6 are in clearance fit. After the lead wire 6 is installed in this way, a space for deformation of the first seal ring 15 and the second sealing section can be formed in the width direction of the waterproof sealing section. When the first wire fixing clamp 1 and the second wire fixing clamp 2 are attached and assembled, and when the protective wire assembly is assembled to a device with a lead wire 6, the deformation of the first seal ring 15 and the second seal ring 16 is easy to occur, thereby ensuring a good waterproof sealing between the first wire fixing clamp 1 and the second wire fixing clamp 2, and between the protective wire assembly and the lead wire 6.

In an embodiment of the present invention, as shown in Figs. 21 and 24, the waterproof sealing section comprises a first waterproof sealing section 107 located on the first wire fixing clamp 1 and a second waterproof sealing section 207 located on the second wire fixing clamp 2, and the first seal ring 15 intersects with the first waterproof sealing section 107, a length of the first waterproof sealing section 107 along a length direction of the wire accommodating cavity 5 is greater than a cross-sectional width of the first seal ring 15 at an intersection, and the second seal ring 16 intersects with the second waterproof sealing section 207 and a length of the second waterproof sealing section 207 along a length direction of the wire accommodating cavity 5 is greater than a cross-sectional width of the second seal ring 16 at an intersection.

In a specific embodiment, the first seal ring 15 and the first waterproof sealing section 107 intersect in the middle of the first waterproof sealing section 107, and the second seal ring 16 and the second waterproof sealing section 207 intersect in the middle of the second waterproof sealing section 207.

According to the above design, after the lead wire 6 is installed in this way, a space for deformation of the first seal ring 15 and the second sealing section can be formed in the length direction of the waterproof sealing section. When the first wire fixing clamp 1 and the second wire fixing clamp 2 are attached and assembled, and when the protective wire assembly is assembled to a device with a lead wire 6, the deformation of the first seal ring 15 and the second seal ring 16 is easy to occur, thereby ensuring a good waterproof sealing between the first wire fixing clamp 1 and the second wire fixing clamp 2, and between the protective wire assembly and the lead wire 6.

Of course, for the solution that the first wire fixing groove 101 is a continuous through groove, the groove width of the waterproof sealing section and the lead wire fastening section formed on the first wire fixing clamp 1 along the length direction can be equal. For the solution that the second wire fixing groove 201 is a continuous through groove, the groove width of the waterproof sealing section and the lead wire fastening section formed on the second wire fixing clamp 2 along the length direction can be equal.

In an embodiment of the present invention, as shown in Fig. 25, at least one set of wire buckles 210 is provided on two sides of each second wire fixing groove 201 on the second wire fixing clamp 2, and the wire buckle 210 is used to confine the lead wire 6 in the second wire fixing groove 201. As shown in Fig. 22, the first wire fixing clamp 1 is provided with a wire buckle accommodating cavity 110 for accommodating the wire buckle 210.

In some embodiments, at least one set of wire buckles 210 is provided on two sides of each first wire fixing groove 101 on the first wire fixing clamp 1, and the wire buckle 210 is used for confining the lead wire 6 in the first wire fixing groove 101, and a wire buckle accommodating cavity 110 for accommodating the wire buckle 210 is provided on the second wire fixing clamp 2.

It should be understood that during assembly, the lead wire 6 is inserted into the wire fixing groove of one of the wire fixing clamps, and then the other wire fixing clamp is buckled and assembled with the wire fixing clamp fitted with the lead wire 6. The setting of the above-mentioned wire buckle 210 facilitates the use of the wire buckle 210 to pre-fix each lead wire 6 in the corresponding wire fixing groove during the lead wire assembly, thereby facilitating the buckling assembly of the first wire fixing clamp 1 and the second wire fixing clamp 2. Specifically, at least one set of the wire buckles 210 can be provided on at least one of the two ends of each first wire fixing groove 101; or at least one set of the wire buckles 210 can be provided on at least one of the two ends of each second wire fixing groove 201, without departing from the design concept of the present invention.

In an embodiment of the present invention, as shown in Figs. 20, 21 and 22, a surface of the first wire fixing clamp 1 facing the second wire fixing clamp 2 is provided with a first positioning post 111 and a first positioning hole 112, as shown in Figs. 5 and 6, a surface of the second wire fixing clamp 2 facing the first wire fixing clamp 1 is provided with a second positioning hole 212 and a second positioning post 211, as shown in Figs. 20, 24 and 25, the first positioning post 111 is inserted into the second positioning hole 212, and the second positioning post 211 is inserted into the first positioning hole 112. By using the cooperation of the positioning post and the positioning hole, the positioning and assembly of the first wire fixing clamp 1 and the second wire fixing clamp 2 are realized, the structure is simple, and the assembly is convenient.

In an embodiment of the present invention, the first wire fixing clamp 1 and the second wire fixing clamp 2 are connected by a connecting portion on one side, and the first wire fixing clamp 1, the second wire fixing clamp 2, and the connecting portion are an integral injection molding structure. By using an integral injection molding structure, which is easy to process and has high connection strength, and makes the fastening and assembly operation of the first wire fixing clamp 1 and the second wire fixing clamp 2 more convenient.

In some embodiments, the first wire fixing clamp 1 is provided with a plurality of first buckling parts, the second wire fixing clamp 2 is provided with a plurality of second buckling parts, the first buckling part and the second buckling part are buckled and connected, so that the first wire fixing clamp 1 is fixed on the second wire fixing clamp 2. The above-mentioned design means that the first wire fixing clamp 1 and the second wire fixing clamp 2 can be processed separately, and then using the cooperation of the first buckling part and the second buckling part, the first wire fixing clamp 1 and the second wire fixing clamp 2 are assembled together, and the assembly operation of the two is convenient.

In an embodiment of the present invention, the first wire fixing clamp 1 and the second wire fixing clamp 2 are both nylon material or PBT material, the first seal ring 15 and the second seal ring 16 are rubber material.

The first wire fixing clamp 1 and the second wire fixing clamp 2 are optionally made of plastic material such as nylon material or PBT (polybutylene terephthalate) material to ensure that the protective wire assembly has a strong fastening force to the lead wire 6 and to ensure that the lead wire 6 has strong tensile strength. The first seal ring 15 and the second seal ring 16 optionally use rubber material to ensure that the protective wire assembly has a good waterproof sealing performance. Of course, the materials of the first wire fixing clamp 1 and the second wire fixing clamp 2 are not limited to the above specific limitations, the materials of the first seal ring 15 and the second seal ring 16 are not limited to the above specific limitations, and the material of the waterproof sealing strip 3 is not limited to the above specific limitations, but the first wire fixing clamp 1 and the second wire fixing clamp 2 and the first seal ring 15 and the second seal ring 16 are made of different materials.

In summary, the protective wire assembly provided by the embodiment of the present invention has the following beneficial effects.

The first seal ring 15 and the second seal ring 16 are installed on the outer peripheral surfaces of the first wire fixing clamp 1 and the second wire fixing clamp 2 respectively. The cooperation of the first seal ring 15 and the second seal ring 16 can play a very good waterproof sealing effect. The cooperation of first wire fixing clamp 1 and the second wire fixing clamp 2 can play a very good role in fixing lead wire 6. The first wire fixing clamp 1 and the second wire fixing clamp 2 are assembled to form a wire accommodating cavity, and the lead wire fastening section of the wire accommodating cavity realizes the fastening of the lead wire 6. Wherein the setting of the occlusal section strengthens the tensile strength of the lead wire 6. The cooperation of the first seal ring 15 and the second seal ring 16 with the waterproof sealing section of the wire accommodating cavity provides an excellent waterproof performance. The first inner groove 701 and the first peripheral groove 105 on the first wire fixing clamp 1 facilitate the assembly of the first seal ring 15, and the second inner groove 702 and the second peripheral groove 205 on the second wire fixing clamp 2 facilitate the assembly of the second seal ring 16. The design of the first overflow groove 106 and the second overflow groove 206 makes the deformation of the first seal ring 15 and the second seal ring 16 easy to occur when the first wire fixing clamp 1 and the second wire fixing clamp 2 are assembled together, and when the protective wire assembly is assembled to the wire outlet 9 of the device. At least one of the two ends of each first wire fixing groove 101 of the first wire fixing clamp 1 or at least one of the two ends of each second wire fixing groove 201 of the second wire fixing clamp 2 is provided with at least one set of wire buckles 210, which facilitates the assembly of the lead wire 6, pre-fix each lead wire 6 in the corresponding wire groove to facilitate the buckle assembly of the first wire fixing clamp 1 and the second wire fixing clamp 2.

As shown in Figs. 27 and 28, the embodiment of the sixth aspect of the present invention provides a device with a lead wire, comprising: a housing provided with a wire outlet 9; and the protective wire assembly according to any one of the embodiments of the above-mentioned fifth aspect, installed at the wire outlet 9.

The present invention has a device with a lead wire provided by the above-mentioned embodiment, because it comprises the protective wire assembly of any one of the embodiments of the above-mentioned fifth aspect, and thus has the beneficial effect of the protective wire assembly of any one of the embodiments of the above-mentioned fifth aspect.

In an embodiment of the present invention, as shown in Figs. 27 and 28, the housing comprises a first housing 7 and a second housing 8, and a wire outlet 9 is enclosed by the first housing 7 and the second housing 8, that is, the wire outlet 9 of the device with the lead wire is enclosed by two parts housing after assembly. The first housing 7 and the second housing 8 jointly form the peripheral wall of the wire outlet 9, which is convenient for the installation of the protective wire assembly and the lead wire 6. A waterproof sealing is formed between the protective wire assembly and the wire outlet 9, that is, a waterproof sealing is formed between the protective wire assembly and the housing of the device where the wire outlet 9 is provided.

In a specific embodiment, as shown in Figs. 27 and 28, the device with the lead wire comprises a first housing 7 and a second housing 8, the wire outlet 9 is enclosed by the first housing 7 and the second housing 8, and the protective wire assembly is set at the wire outlet 9. As shown in Fig. 20, the protective wire assembly comprises a first wire fixing clamp 1, a second wire fixing clamp 2, a first seal ring 15 and a second seal ring 16. As shown in Figs. 21 and 22, the first wire fixing clamp 1 has a first inner surface 102 facing the second wire fixing clamp 2 and a first peripheral surface 103 facing the first housing 7 and the second housing 8, the first inner surface 102 is provided with a plurality of first wire fixing grooves 101. Correspondingly, as shown in Figs. 24 and 25, the second wire fixing clamp 2 has a second inner surface 202 facing the first wire fixing clamp 1 and a second peripheral surface 203 facing the second housing 8, and the second inner surface 202 is provided with a plurality of second wire fixing grooves 201 matching the first wire fixing grooves 101. As shown in Figs. 23 and 24, the first wire fixing groove 101 and the second wire fixing groove 201 cooperate to form a wire accommodating cavity 5. The first seal ring 15 is sleeved on the first inner surface 102 and the first peripheral surface 103 of the first wire fixing clamp 1. As shown in Figs. 25 and 26, the second seal ring 16 is sleeved on the second inner surface 202 and the second peripheral surface 203 of the second wire fixing clamp 2. That is, the first inner surface 102 and the first peripheral surface 103 of the first wire fixing clamp 1 are provided with a first seal ring 15, and the second inner surface 202 and the second peripheral surface 203 of the second wire fixing clamp 2 are provided with a second seal ring 16. The part of the first seal ring 15 located on the first inner surface 102 is in close contact with the wire outlet 9, and the part of the second seal ring 16 located on the second inner surface 202 is in close contact with the wire outlet 9.

In some embodiments, as shown in Figs. 22 and 25, the wire accommodating cavity has a waterproof sealing section and a lead wire fastening section.

In some embodiments, the waterproof sealing section is set in the middle of the wire accommodating cavity, and its cross-sectional area is larger than the cross-sectional area of the contained lead wire 6.

In some embodiments, as shown in Figs. 22 and 25, the waterproof sealing section comprises a first waterproof sealing section 107 located on the first wire fixing clamp 1 and a second waterproof sealing section 207 located on the second wire fixing clamp 2, and the first seal ring 15 and the first waterproof sealing section 107 intersect in the middle of the first waterproof sealing section 107, and the second seal ring 16 and the second waterproof sealing section 207 intersect in the middle of the second waterproof sealing section 207. A length of the first waterproof sealing section 107 along a length direction of the wire accommodating cavity is greater than a cross-sectional width of the first seal ring 15 at an intersection, and a length of the second waterproof sealing section 207 along a length direction of the wire accommodating cavity is greater than a cross-sectional width of the second seal ring 16 at an intersection.

In some embodiments, as shown in Figs. 22 and 25, the lead wire fastening section is set at two ends of the waterproof sealing section, the lead wire fastening section is provided with at least one occlusal section, and the inner wall of the occlusal section is provided with a plurality of convex teeth and the convex teeth clamps the lead wire 6.

In some embodiments, as shown in Figs. 22 and 25, the occlusal section is set at one end of the lead wire fastening section facing the outside of the device, that is, one end of the device facing the wire outlet direction of the wire outlet 9.

In some embodiments, as shown in Figs. 22 and 25, on the first inner surface 102 of the second wire fixing clamp 2, at least one set of wire buckles 210 is provided on at least one end of the first wire fixing groove 101, and correspondingly, the inner surface of the first wire fixing clamp 1 is provided with a wire buckle accommodating cavity 110 for accommodating the wire buckle 210, and the wire buckle 210 is buckled with the lead wire 6.

In some embodiments, as shown in Figs. 22 and 25, the first inner surface 102 is provided with a first inner groove 701, the first peripheral surface 103 is provided with a first peripheral groove 105, and the first seal ring 15 is sleeved in the first inner groove 701 and the first peripheral groove 105. The second inner surface 202 is provided with a second inner groove 702, the second peripheral surface 203 is provided with a second peripheral groove 205, and the second seal ring 16 is sleeved in the second inner groove 702 and the second peripheral groove 205.

In some embodiments, as shown in Figs. 22 and 25, the first inner groove 701 and the first wire fixing groove 101 intersect in the middle of the first waterproof sealing section 107, and the second inner groove 702 and the second wire fixing groove 201 intersect in the middle of the second waterproof sealing section 207.

In some embodiments, as shown in Figs. 22 and 25, the first inner surface 102 of the first wire fixing clamp 1 is provided with a first positioning post 111 and a first positioning hole 112, and correspondingly, the second inner surface 202 of the second wire fixing clamp 2 is provided with a second positioning hole 212 and a second positioning post 211 paired with the first positioning post 111 and the first positioning hole 112, the first positioning post 111 and the second positioning post 211 insert into the first positioning hole 112 and the second positioning hole 212.

In some embodiments, as shown in Fig. 22, the edge of the first inner groove 701 is adjacently provided with a first overflow groove 106, and the edge of the first peripheral groove 105 is also adjacently provided with a first overflow groove 106. As shown in Fig. 25, the edge of the second inner groove 702 is adjacently provided with a second overflow groove 206, the edge of the second peripheral groove 205 is also adjacently provided with a second overflow groove 206.

In some embodiments, the materials of the first wire fixing clamp 1 and the second wire fixing clamp 2 are nylon or PBT.

In some embodiments, the materials of the first seal ring 15 and the second seal ring 16 are rubber.

In some embodiments, the first wire fixing clamp 1 and the second wire fixing clamp 2 are connected by a connecting portion on one side, and the first wire fixing clamp 1, the second wire fixing clamp 2 and the connecting portion are an integral injection molding structure.

In some embodiments, the first wire fixing clamp 1 is provided with a plurality of first buckling parts, and the second wire fixing clamp 2 is provided with a plurality of corresponding second buckling parts, the first buckling part and second buckling part are buckled together.

Specifically, the device with the lead wire is a motor.

Of course, the device with the lead wire is not limited to a motor, but can also be other devices with lead wire, as long as it does not deviate from the design concept of the present invention, it should be within the protection scope of the present invention.

In summary, the protective wire assembly provided by the embodiment of the present invention structurally comprises at least two wire fixing clamps (the first wire fixing clamp and the second wire fixing clamp), and at least two waterproof sealing rings (the first seal ring and the second seal ring). The wire fixing clamp and the waterproof sealing ring are made of different materials, which can realize that the contact part of the housing assembly and the device housing is provided with a waterproof sealing ring. There is also a waterproof sealing ring between the two wire fixing clamps, and a wire accommodating cavity between the two wire fixing clamps. The wire accommodating cavity has a waterproof sealing section and a lead wire fastening section, which are used for waterproofing and wire fixing respectively. Wherein the lead wire fastening section can be set with an occlusal section, and the occlusal section can be set with a convex teeth structure. The purpose is to enhance the fixing ability of the wire fixing clamp to the lead wire. Two wire fixing clamps are provided with a groove structure that facilitates the assembly of the waterproof sealing ring, so that the waterproof sealing ring can be conveniently set at the position where waterproof sealing is required. An overflow groove can also be set around the groove, which makes it easier to deform the waterproof sealing ring when two wire fixing clamps that have been provided with a waterproof sealing ring are buckled together. It is also convenient for the protective wire assembly to be installed into the wire outlet of the housing of the device, the waterproof sealing ring in contact with the housing is easily deformed, which is convenient for assembly. Wherein at least one set of wire buckles is arranged around each wire groove on one of the wire fixing clamps, so that it is more convenient when the lead wire is inserted into the wire groove of the wire fixing clamp sleeved with a waterproof sealing ring. There are several buckling parts on the two wire fixing clamps, which is convenient for the assembly of the two wire fixing clamps. There may also be an integrally injection molded connecting portion between the two wire fixing clamps, so that the two wire fixing clamps and the connecting portion are integrally injection molded.

In the description of the present invention, it should be understood that the orientation or positional relationship indicated by the terms "upper", "lower", "inner", "outer" etc. are based on the orientation or positional relationship shown in the drawings. It is only for the convenient of describing the present invention and simplifying the description, rather than indicating or implying that the device or unit referred to must have a specific orientation, and a specific orientation structure and operation. Therefore, it cannot be understood as a limitation on the present invention.

In the present invention, the term "plurality of" refers to two or more, unless explicitly defined otherwise. The terms "mounted", "interconnected", "connected", "fixed", and the like are to be construed broadly, e.g., "connected" may be fixedly connected; or may be detachably connected; or integrally connected; and "interconnected" may be interconnected directly or indirectly through an intermediary. The specific meaning of the above terms in present invention will be understood by those of ordinary skill in the art, as the case may be.

In this description, the description of the terms "one embodiment", "some embodiments", "particular embodiments", etc., means that particular features, structures, materials; or characteristics described in connection with the embodiment or example is comprised in at least one embodiment or example of the present application. In this description, the schematic representation of the above terms does not necessarily refer to the same embodiment or example. Furthermore, the particular features, structures, materials; or characteristics described may be combined in any suitable manner in any one or more embodiments or examples.

The foregoing is merely a preferred embodiment of the invention and is not intended to limit the invention, as various modifications and changes therein will occur to those skilled in the art. Any modifications, equivalents, improvements, etc. that come within the spirit and principles of the present invention are intended to be comprised within the scope of the present invention.

## Claims

1. A protective wire assembly, used for a device with a lead wire (6), the protective wire assembly installed at a wire outlet (9) of the device, the protective wire assembly comprising:
a first wire fixing clamp (1) provided with a plurality of first wire fixing grooves (101);
a second wire fixing clamp (2) provided with a second wire fixing groove (201), the second wire fixing groove (201) corresponding to the first wire fixing groove (101), the first wire fixing groove (101) and the second wire fixing groove (201) cooperating to form a wire accommodating cavity (5) for fixing the lead wire (6);
a waterproof sealing strip (3) provided between the first wire fixing clamp (1) and the second wire fixing clamp (2), and the waterproof sealing strip (3) intersecting with the wire accommodating cavity (5), in order to form a waterproof sealing between the first wire fixing clamp (1) and the second wire fixing clamp (2); and
a waterproof sealing ring (4) sleeved on an outer peripheral surface of an assembly formed by the first wire fixing clamp (1) and the second wire fixing clamp (2), the waterproof sealing ring (4) used to contact and seal a peripheral wall of the wire outlet (9).

2. The protective wire assembly according to claim 1, wherein
the first wire fixing clamp (1) has a first inner surface (102) facing the second wire fixing clamp (2) and has a first peripheral surface (103) facing the peripheral wall of the wire outlet (9), the first wire fixing groove (101) is provided on the first inner surface (102),
the second wire fixing clamp (2) has a second inner surface (202) facing the first wire fixing clamp (1) and has a second peripheral surface (203) facing the peripheral wall of the wire outlet (9), the second wire fixing groove (201) is provided on the second inner surface (202),
the waterproof sealing strip (3) is provided between the first inner surface (102) and the second inner surface (202),
the waterproof sealing ring (4) is sleeved on an outer peripheral surface formed by the first peripheral surface (103) and the second peripheral surface (203); wherein
an accommodating groove (204) for accommodating the waterproof sealing strip (3) preferably is either provided on the first inner surface (102) or on the second inner surface (202);
wherein
a material of the waterproof sealing strip (3) preferably is a glue, the glue preferably is coated in the accommodating groove (204), and the glue preferably can wrap around the contained lead wire (6) and form the waterproof sealing; and/or
wherein
the first peripheral surface (103) is provided with a first peripheral groove (105) for accommodating the waterproof sealing ring (4), the second peripheral surface (203) is provided with a second peripheral groove (205) for accommodating the waterproof sealing ring (4), the waterproof sealing ring (4) is accommodated in the first peripheral groove (105) and in the second peripheral groove (205);
wherein
an edge of the first peripheral groove (105) preferably is adjacently provided with a first overflow groove (106), an edge of the second peripheral groove (205) preferably is adjacently provided with a second overflow groove (206).

3. The protective wire assembly according to claim 1 or 2, wherein
the wire accommodating cavity (5) comprises a waterproof sealing section (107, 207) and a lead wire fastening section (108, 208), the waterproof sealing strip (3) intersects with the waterproof sealing section (107, 207), the lead wire fastening section (108, 208) is used to fix the lead wire (6); wherein
the lead wire fastening section (108, 208) preferably is provided with at least an occlusal section (109, 209), an inner wall of the occlusal section (109, 209) preferably is provided with a plurality of convex teeth (1091, 2091, 503, 603) for clamping the lead wire (6),
the occlusal section (109, 209) preferably is provided at an end of the lead wire fastening section (108, 208), the end of the lead wire fastening section (108, 208) facing a wire outlet direction of the wire outlet (9); and/or
wherein
the waterproof sealing section (107, 207) preferably is provided in a middle in a length direction of the wire accommodating cavity (5), a cross-sectional area of the waterproof sealing section (107, 207) preferably is larger than a cross-sectional area of the contained lead wire (6),
the waterproof sealing strip (3) and the waterproof sealing section (107, 207) preferably intersect in a middle of the waterproof sealing section (107, 207), a length of the waterproof sealing section (107, 207) along the length direction of the wire accommodating cavity (5) preferably is longer than a cross-sectional width of the waterproof sealing strip (3) at an intersection with the waterproof sealing section (107, 207).

4. The protective wire assembly according to any one of claims 1 to 3, wherein
at least a set of wire buckles (210) is provided on two sides of each second wire fixing groove (201) on the second wire fixing clamp (2), the wire buckle (210) is used to confine the lead wire (6) in the second wire fixing groove (201), a wire buckle accommodating cavity (110) for accommodating the wire buckle (210) is provided on the first wire fixing clamp (1); or
at least a set of wire buckles (210) is provided on two sides of each first wire fixing groove (101) on the first wire fixing clamp (1), the wire buckle (210) is used to confine the lead wire (6) in the first wire fixing groove (101), a wire buckle accommodating cavity (110) for accommodating the wire buckle (210) is provided on the second wire fixing clamp (2); and/or wherein
a surface of the first wire fixing clamp (1) facing the second wire fixing clamp (2) is provided with a first positioning post (111) and a first positioning hole (112), a surface of the second wire fixing clamp (2) facing the first wire fixing clamp (1) is provided with a second positioning hole (212) and a second positioning post (211), the first positioning post (111) inserts into the second positioning hole (212), the second positioning post (211) inserts into the first positioning hole (112); and/or
wherein
the first wire fixing clamp (1) and the second wire fixing clamp (2) are connected by a connecting portion on a side; the first wire fixing clamp (1), the second wire fixing clamp (2), and the connecting portion are an integral injection molding structure; or
the first wire fixing clamp (1) is provided with a plurality of first buckling parts, the second wire fixing clamp (2) is provided with a plurality of second buckling parts, the first buckling part and the second buckling part are buckled and connected, to fix the first wire fixing clamp (1) on the second wire fixing clamp (2).

5. A device with a lead wire (6), comprising:
a housing (7, 8) provided with a wire outlet (9); and
a protective wire assembly according to any one of claims 1 to 4, the protective wire assembly installed at the wire outlet (9).

6. The device with the lead wire (6) according to claim 5, wherein
the device with the lead wire (6) is a motor.

7. A protective wire assembly, used for a device with a lead wire (6), the protective wire assembly installed at a wire outlet (9) of the device, the protective wire assembly comprising:
a first wire clamp (10) provided with a plurality of first wire grooves (301);
a second wire clamp (11) provided with a second wire groove (401), the second wire groove (401) corresponding to the first wire groove (301), the first wire clamp (10) and the second wire clamp (11) assembled in a fitting manner, the first wire groove (301) and the second wire groove (401) jointly form a wire accommodating cavity (5) for accommodating the lead wire (6), an outer circumference of the lead wire (6) can contact and seal the first wire groove (301) and the second wire groove (401), an assembly formed by the first wire clamp (10) and the second wire clamp (11) can contact and seal a peripheral wall of the wire outlet (9);
a first wire holder (12) installed on the first wire clamp (10), a hardness of the first wire holder (12) is higher than a hardness of the first wire clamp (10); and
a second wire holder (13) installed on the second wire clamp (11), a hardness of the second wire holder (13) is higher than a hardness of the second wire clamp (11), the lead wire (6) can be crimped and fixed by the first wire holder (12) and by the second wire holder (13).

8. The protective wire assembly according to claim 7, wherein
the first wire clamp (10) has a first mating surface (302) attaching the second wire clamp (11), the first wire groove (301) is provided on the first mating surface (302), the first wire clamp (10) is provided with a first avoiding hole (303) penetrating the first mating surface (302), the first wire holder (12) is fully or partially inserted into the first avoiding hole (303), the first wire holder (12) is provided with a third wire fixing groove (502) arranged along a length direction of the first wire groove (301),
the second wire clamp (11) has a second mating surface (402) attaching to the first wire clamp (10), the second wire groove (401) is provided on the second mating surface (402), the second wire clamp (11) is provided with a second avoiding hole (403) penetrating the second mating surface (402), the second wire holder (13) is fully or partially inserted into the second avoiding hole (403), the second wire holder (13) is provided with a fourth wire fixing groove (602) arranged along a length direction of the second wire groove (401), the third wire fixing groove (502) and the fourth wire fixing groove (602) jointly fix the lead wire (6);
wherein
a number of the first avoiding holes (303) preferably is equal to a number of the first wire grooves (301), and the first avoiding holes (303) preferably are arranged along the length direction of the first wire groove (301), the first wire holder (12) preferably is provided with a first wire fixing tooth (501), a number of the first wire fixing teeth (501) preferably is equal to the number of the first avoiding holes (303), the first wire fixing tooth (501) preferably correspondingly inserts into the first avoiding hole (303), each of the first wire fixing teeth (501) is provided with one third wire fixing groove (502),
a number of the second avoiding holes (403) preferably is equal to a number of the second wire grooves (401), and the second avoiding holes (403) preferably are arranged along the length direction of the second wire groove (401), the second wire holder (13) preferably is provided with a second wire fixing tooth (601), a number of the second wire fixing teeth (601) preferably is equal to the number of the second avoiding holes (403), the second wire fixing tooth (601) preferably correspondingly inserts into the second avoiding hole (403), each of the second wire fixing teeth (601) preferably is provided with one fourth wire fixing groove (602), the corresponding third wire fixing groove (502) and the fourth wire fixing groove (602) preferably jointly fix the lead wire (6);wherein
a groove wall of the third wire fixing groove (502) preferably is provided with a plurality of third convex teeth (503) for clamping the lead wire (6), a groove wall of the fourth wire fixing groove (602) preferably is provided with a plurality of fourth convex teeth (603) for clamping the lead wire (6); and/or
wherein
the first wire clamp (10) has a first sealing surface (304) for contact with the peripheral wall of the wire outlet (9), the second wire clamp (11) has a second sealing surface (404) for contact with the peripheral wall of the wire outlet (9), the first sealing surface (304) and the second sealing surface (404) jointly realize a contact sealing between the protective wire assembly and the peripheral wall of the wire outlet (9); and/or
wherein
the first wire holder (12) has a first abutment part (504) for contact with the peripheral wall of the wire outlet (9), the second wire holder (13) has a second abutment part (604) for contact with the peripheral wall of the wire outlet (9), the first abutment part (504) and the second abutment part (604) jointly realize a fastening between the protective wire assembly and the peripheral wall of the wire outlet (9); wherein
at least either the first abutment part (504) or the second abutment part (604) preferably is provided with a convex portion, the convex portion preferably is used for inserting into a concave portion provided in the wire outlet (9) portion of the device; or
at least either the first abutment part (504) or the second abutment part (604) preferably is provided with a concave portion, the concave portion preferably is used for inserting into the convex portion provided in the wire outlet (9) portion of the device; and/or
wherein
a third positioning post (605) is provided on either the first wire holder (12) or on the second wire holder (13), a corresponding positioning hole (505) is provided on the other of the first wire holder (12) or on the second wire holder (13), the corresponding positioning hole (505) is also provided on the first wire clamp (10) and on the second wire clamp (11), the third positioning post (605) is inserted into the positioning hole (505); and/or
wherein
the first wire clamp (10) and the second wire clamp (11) are connected by a connecting portion on a side; the first wire clamp (10), the second wire clamp (11), and the connecting portion are an integral injection molding structure; or
the first wire clamp (10) is provided with a plurality of first buckling parts, the second wire clamp (11) is provided with a second buckling part corresponding to the first buckling part, the first buckling part and the second buckling part are buckled and connected to fix the first wire clamp (10) on the second wire clamp (11); and/or
wherein
the first wire clamp (10) and the second wire clamp (11) are both wire clamps made of a rubber material,
the first wire holder (12) and the second wire holder (13) are both wire holders made of a plastic material.

9. A device with a lead wire (6), comprising:
a housing (7, 8) provided with a wire outlet (9); and
a protective wire assembly according to claim 7 or 8, the protective wire assembly installed at the wire outlet (9).

10. The device with the lead wire (6) according to claim 9, wherein
the device with the lead wire (6) is a motor.

11. A protective wire assembly, used for a device with a lead wire (6), the protective wire assembly installed at a wire outlet (9) of the device, the protective wire assembly comprising:
a first wire fixing clamp (1) provided with a plurality of first wire fixing grooves (101);
a second wire fixing clamp (2) provided with a second wire fixing groove (201), the second wire fixing groove (201) corresponding to the first wire fixing groove (101), the first wire fixing groove (101) and the second wire fixing groove (201) cooperating to form a wire accommodating cavity (5) for fixing the lead wire (6);
a first seal ring (15) sleeved on an outer peripheral surface of the first wire fixing clamp (1); and
a second seal ring (16) sleeved on an outer peripheral surface of the second wire fixing clamp (2), the first seal ring (15) and the second seal ring (16) jointly form a first sealing structure used to contact and seal a peripheral wall of the wire outlet (9), the first sealing structure formed on an outer peripheral surface of the protective wire assembly, the first seal ring (15) and the second seal ring (16) jointly form a second sealing structure between the first wire fixing clamp (1) and the second wire fixing clamp (2).

12. The protective wire assembly of claim 11, wherein
the first wire fixing clamp (1) has a first inner surface (102) facing the second wire fixing clamp (2) and a first peripheral surface (103) facing the peripheral wall of the wire outlet (9), the first wire fixing groove (101) is provided on the first inner surface (102), the first seal ring (15) is sleeved on an outer peripheral surface formed by the first inner surface (102) and by the first peripheral surface (103), and the first seal ring (15) intersects with the first wire fixing groove (101),
the second wire fixing clamp (2) has a second inner surface (202) facing the first wire fixing clamp (1) and a second peripheral surface (203) facing the peripheral wall of the wire outlet (9), the second wire fixing groove (201) is provided on the second inner surface (202), the second seal ring (16) is sleeved on an outer peripheral surface formed by the second inner surface (202) and by the second peripheral surface (203), and the second seal ring (16) intersects with the second wire fixing groove (201),
a portion of the first seal ring (15) located on the first peripheral surface (103) and a portion of the second seal ring (16) located on the second peripheral surface (203) jointly form the first sealing structure, a portion of the first seal ring (15) located on the first inner surface (102) and a portion of the second seal ring (16) located on the second inner surface (202) jointly form the second sealing structure;
wherein
the first inner surface (102) preferably is provided with a first inner groove (701), the first peripheral surface (103) preferably is provided with a first peripheral groove (105), and the first seal ring (15) preferably is accommodated in the first inner groove (701) and in the first peripheral groove (105),
the second inner surface (202) preferably is provided with a second inner groove (702), the second peripheral surface (203) preferably is provided with a second peripheral groove (205), and the second seal ring (16) preferably is accommodated in the second inner groove (702) and in the second peripheral groove (205);
wherein
at least either an edge of the first inner groove (701) or an edge of the first peripheral groove (105) preferably is adjacently provided with a first overflow groove (106),
at least either an edge of the second inner groove (702) or an edge of the second peripheral groove (205) preferably is adjacently provided with a second overflow groove (206); and/or
wherein
the first inner surface (102) preferably is provided with a boss (113), the first wire fixing groove (101) preferably is provided on the boss (113), the second inner surface (202) preferably is provided with a groove (213), the second wire fixing groove (201) preferably is provided on a bottom wall of the groove (213), the first wire fixing clamp (1) preferably is buckled with the second wire fixing clamp (2), the boss (113) preferably is installed in the groove (213); or
the second inner surface (202) preferably is provided with a boss (113), the second wire fixing groove (201) preferably is provided on the boss (113), the first inner surface (102) preferably is provided with a groove (213), the first wire fixing groove (101) preferably is provided on a bottom wall of the groove (213), the first wire fixing clamp (1) preferably is buckled with the second wire fixing clamp (2), the boss (113) preferably is installed in the groove (213).

13. The protective wire assembly according to claim 11 or 12, wherein
the wire accommodating cavity (5) comprises a waterproof sealing section (107, 207) and a lead wire fastening section (108, 208), the first seal ring (15) and the second seal ring (16) both intersect with the waterproof sealing section (107, 207), the lead wire fastening section (108, 208) is used for fixing the lead wire (6);
wherein
the lead wire fastening section (108, 208) preferably is provided with at least an occlusal section (109, 209), an inner wall of the occlusal section (109, 209) preferably is provided with a plurality of convex teeth (1091, 2091, 503, 603) for clamping the lead wire (6),
the occlusal section (109, 209) preferably is provided at an end of the lead wire fastening section (108, 208), the end of the lead wire fastening section (108, 208) facing a wire outlet direction of the wire outlet (9); and/or
wherein
the waterproof sealing section (107, 207) preferably is provided in a middle in a length direction of the wire accommodating cavity (5), a cross-sectional area of the waterproof sealing section (107, 207) preferably is larger than a cross-sectional area of the contained lead wire (6),
the waterproof sealing section (107, 207) preferably comprises a first waterproof sealing section (107) located on the first wire fixing clamp (1) and a second waterproof sealing section (207) located on the second wire fixing clamp (2), the first seal ring (15) preferably intersects with the first waterproof sealing section (107), a length of the first waterproof sealing section (107) along the length direction of the wire accommodating cavity (5) preferably is greater than a cross-sectional width of the first seal ring (15) at an intersection with the first waterproof sealing section (107), the second seal ring (16) preferably intersects with the second waterproof sealing section (207), a length of the second waterproof sealing section (207) along the length direction of the wire accommodating cavity (5) preferably is greater than a cross-sectional width of the second seal ring (16) at an intersection with the second waterproof sealing section (207); and/or
wherein
at least a set of wire buckles (210) is provided on two sides of each of the second wire fixing grooves (201) on the second wire fixing clamp (2), the wire buckle (210) is used for confining the lead wire (6) in the second wire fixing groove (201), a wire buckle accommodating cavity (110) for accommodating the wire buckle (210) is provided on the first wire fixing clamp (1); or
at least a set of wire buckles (210) is provided on two sides of each of the first wire fixing grooves (101) on the first wire fixing clamp (1), the wire buckle (210) is used for confining the lead wire (6) in the first wire fixing groove (101), a wire buckle accommodating cavity (110) for accommodating the wire buckle (210) is provided on the second wire fixing clamp (2); and/or
wherein
a surface of the first wire fixing clamp (1) facing the second wire fixing clamp (2) is provided with a first positioning post (111) and a first positioning hole (112), a surface of the second wire fixing clamp (2) facing the first wire fixing clamp (1) is provided with a second positioning hole (212) and a second positioning post (211), the first positioning post (111) is inserted into the second positioning hole (212), the second positioning post (211) is inserted into the first positioning hole (112); and/or
wherein
the first wire fixing clamp (1) and the second wire fixing clamp (2) are connected by a connecting portion on a side; the first wire fixing clamp (1), the second wire fixing clamp (2) and the connecting portion are an integral injection molding structure; or
the first wire fixing clamp (1) is provided with a plurality of first buckling parts, the second wire fixing clamp (2) is provided with a plurality of second buckling parts, the first buckling part and the second buckling part are buckled and connected to fix the first wire fixing clamp (1) on the second wire fixing clamp (2).

14. A device with a lead wire (6), comprising:
a housing (7, 8) provided with a wire outlet (9); and
a protective wire assembly of any one of claims 11 to 13, the protective wire assembly installed at the wire outlet (9).

15. The device with the lead wire (6) according to claim 14, wherein
the device with the lead wire (6) is a motor.
